# EUROPÄISCHE PATENTSCHRIFT

(11) **EP 3 694 795 B1**
(45) Veröffentlichungstag und Bekanntmachung des Hinweises auf die Patenterteilung: **26.01.2022**
(21) Anmeldenummer: 18783420.5
(22) Anmeldetag: 02.10.2018
(51) Int. Cl.: B65G 47/08, B65G 47/244

(54) **VORRICHTUNG UND VERFAHREN ZUM UMGANG MIT IN MINDESTENS DREI REIHEN BEWEGTEN STÜCKGÜTERN**
DEVICE AND METHOD FOR HANDLING PIECE GOODS ITEMS MOVED IN AT LEAST THREE ROWS
DISPOSITIF ET PROCÉDÉ PERMETTANT LA MANUTENTION DE CHARGES ISOLÉES DÉPLACÉES EN AU MOINS TROIS RANGÉES PARALLÈLES

(30) Priorität: 10.10.2017 DE 102017123563
(43) Veröffentlichungstag der Anmeldung: 19.08.2020
(73) Patentinhaber: KRONES Aktiengesellschaft, 93073 Neutraubling (DE)
(72) Erfinder: WESTERMEIER, Christian, 93073 Neutraubling (DE); BEER, Erhard, 93073 Neutraubling (DE); KIRZINGER, Johannes, 93073 Neutraubling (DE); KOLLMUSS, Manuel, 93073 Neutraubling (DE); EHBERGER, Marco, 93073 Neutraubling (DE); ASTNER, Michael, 93073 Neutraubling (DE); GRIMM, Sebastian, 93073 Neutraubling (DE); MEHDI, Arsalan, 93073 Neutraubling (DE); SCHWALB, Felix, 93073 Neutraubling (DE)
(74) Vertreter: Benninger, Johannes
(86) Internationale Anmeldenummer: PCT/EP2018/076875
(87) Internationale Veröffentlichungsnummer: WO 2019/072659

(56) Entgegenhaltungen:
- EP-A1- 1 223 121
- EP-A2- 2 246 277
- EP-B1- 1 223 121
- DE-A1-102013 202 872
- Krones: "Robobox T Tripod solution for the palletising technology", , 30. Juli 2017 (2017-07-30), XP055538238, Gefunden im Internet: URL:https://www.google.com/url?sa=t&rct=j& q=&esrc=s&source=web&cd=12&cad=rja&uact=8& ved=2ahUKEwj2rtCbsdTfAhVP-qQKHXrDDjYQFjALe gQIABAC&url=https%3A%2F%2F5.imimg.com%2Fda ta5%2FEN%2FFE%2FMY-4754822%2Fkrones-robobo x-t-gs-grouping-system.pdf&usg=AOvVaw334_W x4Wp941sCIZ_I_oZA [gefunden am 2019-01-04]

## Beschreibung

Die vorliegende Erfindung betrifft eine Vorrichtung zum Umgang mit in mindestens drei parallelen Reihen bewegten Stückgütern mit den Merkmalen des unabhängigen Anspruchs 1. Weiterhin betrifft die Erfindung ein Verfahren zum Umgang mit in mindestens drei parallelen Reihen bewegten Stückgütern mit den Merkmalen des unabhängigen Verfahrensanspruchs 12.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Geeignete Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Robotern, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

Das Dokument EP 2246277 A1 beschreibt eine Vorrichtung und ein Verfahren zum definierten Zusammenführen von Gebinden und/oder Gebindegruppen mit mindestens zwei Zuförderern und mindestens einem Abförderer. Zwischen diesen ist mindestens ein Sortierförderer mit mindestens einem Greifer für die Gebinde und/oder Gebindegruppen vorgesehen. EP 2246277 A1 offenbart eine Vorrichtung gemäß dem Oberbegriff des Anspruchs 1 sowie ein Verfahren gemäß dem Oberbegriff des Anspruchs 12.

Die Offenlegungsschrift DE 102013202872 A1 beschreibt ein Verfahren und eine Vorrichtung zum Ausrichten und/oder Gruppieren von Artikeln, Stückgütern oder Gebinden, die in wenigstens einer Reihe zu einem Bewegungsraum gefördert werden. In dem Bewegungsraum wird jedes einzelne zu bewegende Stückgut oder Gebinde durch eine Manipulationseinrichtung an wenigstens einer Seitenfläche kontaktiert und verschoben und/oder gedreht.

Mit allen diesen bekannten Handhabungssystemen werden in erster Linie präzise Positionierungen von Stückgütern, Paketen, Gebinden und/oder Artikeln für eine möglichst störungsfreie und zuverlässige Lagenbildungs-, Palettierungs- und/oder Verpackungsvorbereitung angestrebt. Ein Nebenziel, das jedoch zunehmend wichtiger wird, besteht darin, hierbei die Taktzeiten zu reduzieren, ohne hinsichtlich eines bereits erreichten Grades an Präzision und/oder hinsichtlich der bereits erreichten Zuverlässigkeit Einbußen in Kauf nehmen zu müssen.

Angesichts des bekannten Standes der Technik kann es als Ziel der vorliegenden Erfindung angesehen werden, eine exakte und positionsgenaue und insbesondere schnelle Verarbeitung und Handhabung von Stückgütern zu ermöglichen, die in mindestens drei Reihen befördert bzw. transportiert werden. Die Bewegungssteuerung von mindestens zwei parallel angeordneten und im Wesentlichen parallel arbeitenden Manipulatoren zur Erfassung der Stückgüter soll exakt auf die Position der angelieferten Stückgüter abstimmbar sein, ohne dass hierzu ein großer Rechen- und/oder Steuerungsaufwand erforderlich sein soll. Alternativ und/oder zusätzlich soll die Position der angelieferten Stückgüter angepasst werden, um eine exakte und positionsgenaue Verarbeitung und Handhabung von Stückgütern zu gewährleisten

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung der Manipulatoren betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einer Vorrichtung zum Umgang mit in mindestens zwei parallelen Reihen bewegten Stückgütern und mit einem Verfahren zum Umgang mit in mindestens zwei parallelen Reihen bewegten Stückgütern erreicht, welche die Merkmale der unabhängigen Patentansprüche 1 bzw. 12 umfassen. Merkmale vorteilhafter Weiterbildungen der Erfindung ergeben sich aus den jeweiligen abhängigen Ansprüchen.

Die Erfindung betrifft eine Vorrichtung und ein Verfahren zum Umgang mit in mindestens drei parallelen Reihen bewegten Stückgütern. Die Stückgüter werden über wenigstens eine Transporteinrichtung in mindestens drei Reihen in einer Transportrichtung zu mindestens einem Erfassungsbereich von mindestens zwei unabhängig voneinander ansteuer- und bewegbaren Manipulatoren transportiert. Insbesondere ist jedem der beiden Manipulatoren jeweils ein eigener Erfassungsbereich und/oder Bewegungsraum zugeordnet. Hierbei kann es in einigen Fällen sinnvoll sein, wenn sich die mindestens zwei Erfassungsbereiche der mindestens zwei Manipulatoren zumindest bereichsweise überlappen.

Den Erfassungsbereichen der mindestens zwei Manipulatoren ist mindestens eine sich an die mindestens eine Transporteinrichtung fluchtend anschließende Horizontalfördereinrichtung zugeordnet, welche die in die Erfassungsbereiche gelangenden und dort mittels der Manipulatoren gedrehten und/oder verschobenen Stückgüter in Transportrichtung weiterführt.

Den wenigstens zwei Erfassungsbereichen der mindestens zwei Manipulatoren sind wenigstens zwei bewegbare optische Erfassungseinrichtungen zur Gewinnung von Raumkoordinaten und/oder Positions- und/oder Umrissdaten wenigstens eines in Transportrichtung bewegten Stückgutes der wenigstens drei Reihen zugeordnet. Die wenigstens zwei optischen Erfassungseinrichtungen sind an einander gegenüberliegenden Längsseiten der Horizontalfördereinrichtung parallel zur Transportrichtung in oder entgegen der Transportrichtung beweglich angeordnet. Zumindest die Manipulatoren und/oder weitere Förderkomponenten der Vorrichtung können auf Grundlage der Raumkoordinaten und/oder Positions- und/oder Umrissdaten kalibriert und/oder gesteuert werden.

Wenn im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit bewegten Stückgütern gemeint. Vorzugsweise betrifft dies ein Verfahren zum Umgang mit in mindestens drei Reihen hintereinander bewegten Stückgütern. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit bewegten Stückgütern gemeint, insbesondere zum Umgang mit in mindestens drei Reihen hintereinander bewegten Stückgütern.

Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den bewegten Stückgütern kann es sich gemäß einer bevorzugten Ausführungsform um in mindestens drei Reihen hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in drei parallelen Reihen hintereinander bewegten Stückgüter können dabei je nach Anforderung von nachfolgenden Handhabungsvorrichtungen gleich oder unterschiedlich ausgebildet sein.

Die Stückgüter können innerhalb der mindestens drei Reihen auf unterschiedliche Art- und Weise transportiert werden. Gemäß einer Ausführungsform der Erfindung werden die Stückgüter innerhalb der Reihen jeweils über eine entsprechende Transporteinrichtung und jeweils voneinander beabstandet und durch Lücken voneinander getrennt zu einem Erfassungsbereich wenigstens eines Manipulators der erfindungsgemäßen Vorrichtung transportiert. Bevorzugt können auch Gruppen von Stückgütern dem Erfassungsbereich des wenigstens einen Manipulators zugeführt werden, wobei diese Gruppen jeweils mehrere, insbesondere mindestens zwei zumindest weitgehen lückenlos aneinandergrenzende Stückgüter innerhalb der mindestens drei Reihen umfassen können. Die Gruppen können auch unterschiedlich groß sein; zudem kann einer Gruppe mit zwei, drei oder vier lückenlos aneinandergrenzenden Stückgütern ein einzelnes Stückgut folgen etc. Eine weitere Ausführungsform sieht vor, dass die Stückgüter innerhalb der mindestens drei Reihen ohne Abstände oder mit minimalen Abständen als ununterbrochene bzw. geschlossene Formation zugeführt werden.

Unter einer geschlossenen Formation versteht man in diesem Zusammenhang insbesondere eine als Endlos-Formation ausgebildete Reihe an hintereinander transportierten Stückgütern, die keine Unterbrechung oder nur minimale Unterbrechungen zwischen den Stückgütern aufweist und eine beliebige Anzahl von Stückgütern umfassen kann. In der geschlossenen Formation können die Stückgüter insbesondere Stoß an Stoß transportiert werden. Dies wird beispielsweise durch einen einmalig aufgebrachten Staudruck von hinten verursacht. Der Staudruck wird dabei vorzugsweise vor oder kurz vor dem Erfassungsbereich der wenigsten zwei Manipulatoren der Handhabungsvorrichtung erzeugt. Alternativ kann vorgesehen sein, dass dauerhaft zumindest ein leichter Staudruck von hinten auf die Stückgüter einwirkt. Die geschlossene Formation ist von einer unterbrochenen Formation zu unterscheiden, bei der jeweils Gruppen mit jeweils einer definierten Anzahl von Stückgütern nacheinander zugeführt werden, wobei die Gruppen jeweils dieselbe Anzahl an Stückgütern oder eine unterschiedliche Anzahl an Stückgütern umfassen und jeweils durch Lücken voneinander getrennt sind.

Die mindestens eine Transporteinrichtung der Vorrichtung kann beispielsweise jeweils durch einen Horizontalförderer, insbesondere ein Horizontalförderband, gebildet werden. Auf der mindestens einen Transporteinrichtung werden die Stückgüter in mindestens drei parallelen Reihen einem Gruppiermodul zugeführt. Es kann auch vorgesehen sein, dass jede der mindestens drei parallelen Reihen auf einer eigenen Transporteinrichtung befördert wird, d.h., die Vorrichtung umfasst in einem solchen Fall mindestens drei parallele Transporteinrichtungen. Weitere Ausführungsbeispiele, bei denen beispielsweise auf einer ersten Transporteinrichtung eine einzelne Reihe von Stückgütern und auf einer zweiten Transporteinrichtung zwei Reihen von Stückgütern zugeführt werden und weitere Varianten, sind für den Fachmann ebenfalls umfasst. Von der mindestens einen Transporteinrichtung gelangen die Stückgüter auf eine nachfolgend angeordnete Horizontalfördereinrichtung.

Die Horizontalfördereinrichtung und die mindestens zwei Manipulatoren mit ihren jeweiligen Erfassungsbereichen bilden insbesondere das Gruppiermodul der Vorrichtung. Die Horizontalfördereinrichtung kann durch ein einziges Förderband gebildet werden, dass insbesondere fluchtend zu der mindestens einen Transporteinrichtung angeordnet ist. Gemäß einer Ausführungsform der Erfindung wird die Horizontalfördereinrichtung insbesondere durch eine Mehrzahl von Gruppierbändern gebildet, deren Anzahl beispielsweise einer Anzahl an zuführenden Transporteinrichtungen entspricht, wobei jeweils ein Gruppierband der Horizontalfördereinrichtung in Transportrichtung fluchtend an eine Transporteinrichtung anschließt. Die Gruppierbänder bilden gemeinsam eine Horizontalförderfläche, auf der einlaufende Stückgüter durch die Manipulatoren der Vorrichtung innerhalb eines Erfassungsbereiches erfasst, in eine Zielposition und/oder Zielausrichtung verbracht und insbesondere auch freigegeben werden. Es kann vorgesehen sein, dass die Transporteinrichtungen und/oder die Gruppierbänder jeweils einzeln ansteuerbar sind. Bevorzugt ist jedoch vorgesehen, dass sich die Transporteinrichtungen und/oder die Gruppierbänder synchron bewegen bzw. bewegt werden.

Der Erfassungsbereich im Sinne der vorliegenden Erfindung definiert insbesondere einen jeweiligen Bewegungsraum eines Manipulators der erfindungsgemäßen Vorrichtung. Die mindestens zwei Manipulatoren sind typischerweise und/oder vorzugsweise zum klemmenden und/oder formschlüssigen und/oder kraftschlüssigen Erfassen und/oder Entgegennehmen jeweils mindestens eines Stückgutes aus mindestens einer der mittels der wenigstens drei werden auf Grundlage der ermittelten Raumkoordinaten und/oder Positions- und/oder Umrissdaten kalibriert Transporteinrichtungen in den Erfassungsbereich des Manipulators einlaufenden mindestens drei Reihen von hintereinander transportierten Stückgütern ausgebildet. Weiterhin sind die Manipulatoren zum Abtrennen und selektiven Überführen des jeweils mindestens einen erfassten Stückgutes in eine Zielposition und/oder Zielausrichtung ausgebildet.

Gemäß einer Ausführungsform können den Manipulatoren jeweils wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel der Manipulatoren sind während des Erfassens der Stückgüter vorzugsweise parallel zur Transportrichtung der zulaufenden Stückgüter ausgerichtet.

Aus den bewegten Stückgütern mindestens einer der mindestens drei Reihen, insbesondere aus den vereinzelt, in Gruppen oder als geschlossene Formation zugeführten Stückgütern, wird im Erfassungsbereich wenigstens eines der Manipulatoren wenigstens ein transportiertes Stückgut klemmend und/oder kraftschlüssig und/oder formschlüssig vom jeweiligen Manipulator erfasst, von den nachfolgenden Stückgütern der jeweiligen Reihe räumlich abgetrennt und in eine definierte relative Zielposition und/oder Zielausrichtung gegenüber den nachfolgenden Stückgütern der jeweiligen Reihe gebracht. Zeitgleich oder zeitlich versetzt wird wenigstens ein Stückgut einer anderen der wenigstens drei Reihen durch den mindestens einen anderen Manipulator klemmend und/oder kraftschlüssig und/oder formschlüssig erfasst, von den nachfolgenden Stückgütern der jeweiligen Reihe räumlich abgetrennt und in eine definierte relative Zielposition und/oder Zielausrichtung gegenüber den nachfolgenden Stückgütern der jeweiligen Reihe gebracht. Dies erfolgt insbesondere in einem kontinuierlichen Prozess, bei dem die Zufuhr nachfolgender Stückgüter nicht unterbrochen wird, sondern kontinuierlich fortgeführt wird.

Die Stückgüter werden nach Verbringen in ihre jeweilige definierte Zielposition mittels der mindestens zwei sich gegenüberliegenden Klemm- und/oder Greifmittel des jeweiligen Manipulators freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sind.

Hierbei werden zumindest Raumkoordinaten und/oder Positions- und/oder Umrissdaten wenigstens eines in Transportrichtung bewegten Stückgutes der zum Erfassungsbereich transportierten Stückgüter vor dem Erfassen durch einen der Manipulatoren sensorisch erfasst und einer Steuer- und/oder Auswerteeinheit als Positionswert zur Verfügung gestellt.

Die hierzu notwendige Sensorik wird durch wenigstens zwei dem Erfassungsbereich und/oder einem Bewegungsraum der wenigstens zwei Manipulatoren räumlich und/oder funktionell zugeordnete und vorzugsweise beweglich ausgebildeten optischen Erfassungseinrichtungen bereitgestellt. Diese dienen der Erfassung der oben genannten Daten, d.h. insbesondere der zumindest Raumkoordinaten und/oder Positions- und/oder Umrissdaten eines bewegten Stückguts bzw. auch nur dessen aktuelle Vorderkantenposition bzw. Umrissposition einer zugeordneten der mindestens drei Reihen.

Zumindest einer der Manipulatoren und/oder weitere Förderkomponenten der Vorrichtung, beispielsweise die jeweilige Transporteinrichtung(en), über die die Stückgüter der jeweiligen Reihe dem Erfassungsbereich zugeführt werden oder die Horizontalfördereinrichtung oder das jeweilige dem Erfassungsbereich zugeordnete Gruppierband der Horizontalfördereinrichtung der jeweiligen Reihe etc. werden auf Grundlage der ermittelten Raumkoordinaten und/oder Positions- und/oder Umrissdaten durch die Steuer- und/oder Auswerteeinheit kalibriert und/oder angesteuert. Weiterhin können die ermittelten Daten auch in Rückkoppelung der Position der beweglichen optischen Erfassungseinrichtung verwendet werden. Beispielsweise kann das Erfassen einer Raumkoordinate oder von entsprechenden Positions- und/oder Umrissdaten eine Aktivierung oder Inaktivierung der optischen Erfassungseinrichtung auslösen, ein Mitführen der optischen Erfassungseinrichtung mit der Transporteinrichtung und/oder Horizontalfördereinrichtung auslösen o.ä. Sobald sich Abweichungen bei den Gebindemaßen u/o der Fördergeschwindigkeit o.ä. ergeben, kann das wie nachfolgend noch näher beschrieben ständig - d.h. für alle nachfolgenden Zyklen bzw. Manipulationsschritte - nachkorrigiert werden.

Gemäß einer bevorzugten Ausführungsform der vorliegenden Erfindung können die mindestens zwei optischen Erfassungseinrichtungen unabhängig voneinander zumindest temporär parallel zu der Horizontalfördereinrichtung bewegt werden. Insbesondere sind die mindestens zwei optischen Erfassungseinrichtungen in etwa parallel beweglich zur Transportrichtung der Stückgüter auf der mindestens einen zuführenden Transporteinrichtung bzw. der Horizontalfördereinrichtung ausgebildet. Die mindestens zwei beweglichen optischen Erfassungseinrichtungen sind insbesondere in ihrem jeweiligen Bewegungsbereich parallel zur Transportrichtung der Stückgüter bzw. der Gruppen von jeweils mindestens zwei gruppierten Stückgütern auf oder parallel zu der Horizontalfördereinrichtung des Gruppiermoduls beweglich.

Der Bewegungsbereich jeder optischen Erfassungseinrichtung wird jeweils durch einen Anfangspunkt und einen Endpunkt begrenzt und definiert somit den Erkennungsbereich der jeweiligen optischen Erfassungseinrichtung. Um die Bewegung der jeweiligen optischen Erfassungseinrichtung in Transportrichtung bzw. entgegen der Transportrichtung zu realisieren, ist diese beispielsweise auf einem Schlitten bzw. Laufschlitten angeordnet, der in einer Schiene, einen Zahnriemenantrieb o.ä. verfahren werden kann, wobei die Schiene parallel zu der in einer Flucht innerhalb einer Reihe hintereinander angeordneten Stückgütern neben oder oberhalb der Horizontalfördereinrichtung angeordnet ist. Insbesondere kann die jeweilige optische Erfassungseinrichtung zwischen dem Anfangspunkt und dem Endpunkt innerhalb ihres jeweiligen Bewegungsbereiches verfahren werden.

Gemäß einer Ausführungsform deckt der Bewegungsbereich bzw. Erkennungsbereich jeder optischen Erfassungseinrichtung jeweils in etwa eine Länge des gesamten Erfassungsbereichs der Manipulatoren parallel zur Transportrichtung ab. Insbesondere können die optischen Erfassungseinrichtungen jeweils parallel zur gesamten Länge der Horizontalfördereinrichtung des Gruppiermoduls bewegt werden. Gemäß einer anderen Ausführungsform ist vorgesehen, dass der Bewegungsbereich bzw. Erkennungsbereich der optischen Erfassungseinrichtung jeweils nur einen in Transportrichtung an die Transporteinrichtung grenzenden Teilbereich der Horizontalfördereinrichtung des Gruppiermoduls abdeckt, während eine weitere alternative Ausführungsform ebenfalls offenbart wird, bei der die optische Erfassungseinrichtung jeweils einen Bewegungsbereich aufweist, der sich über die Horizontalfördereinrichtung des Gruppiermoduls hinaus erstreckt.

Die Bewegung der optischen Erfassungseinrichtungen ist vorzugsweise nicht mechanisch an die Bewegung des Manipulators gekoppelt. Insbesondere verfügen die an gegenüberliegenden Längsseiten der Horizontalfördereinrichtung angeordneten optischen Erfassungseinrichtungen jeweils über einen eigenständigen, unabhängigen Antrieb. Gemäß einer Ausführungsform sind die optischen Erfassungseinrichtungen jeweils linearbeweglich, während die Manipulatoren zumindest innerhalb einer Bewegungsebene, vorzugsweise innerhalb eines dreidimensionalen Raumes verfahrbar sind. Wie nachfolgend noch näher beschrieben wird, kann dagegen über die Steuer- und/oder Auswerteeinheit eine elektronische Kopplung zwischen den Manipulatoren und den optischen Erfassungseinrichtungen vorgesehen sein.

Gemäß einer Ausführungsform der Erfindung ist vorgesehen, dass die Vorrichtung eine Mehrzahl an optischen Erfassungseinrichtungen umfasst, wobei die Anzahl an optischen Erfassungseinrichtungen der Anzahl an zur Horizontalfördereinrichtung des Gruppiermoduls zuführenden Reihen von Stückgütern entspricht. Insbesondere sind bei einer Vorrichtung, bei der Stückgüter in drei Reihe zugeführt werden, drei optische Erfassungseinrichtungen vorgesehen, wobei vorzugsweise jeweils eine optische Erfassungseinrichtung physikalische Parameter von Stückgütern jeweils einer zugeordneten Reihe erfassen kann. Dementsprechend sind bei einer Vorrichtung mit vier zuführenden Reihen auch vier optische Erfassungseinrichtungen vorgesehen usw.

Gemäß einer Ausführungsform der Erfindung ist vorgesehen, dass bei einer Vorrichtung mit mindestens drei optischen Erfassungseinrichtungen mindestens zwei der optischen Erfassungseinrichtungen im Bereich einer Längsseite der Horizontalfördereinrichtung angeordnet sind, während zumindest eine dritte optische Erfassungseinrichtung an der gegenüberliegenden Längsseite der Horizontalfördereinrichtung beweglich angeordnet ist.

Gemäß einer Ausführungsform der Erfindung kann hierbei vorgesehen sein, dass den mindestens zwei optischen Erfassungseinrichtungen im Bereich einer Längsseite der Horizontalfördereinrichtung ein gemeinsamer Antrieb zugeordnet ist. Die mindestens zwei optischen Erfassungseinrichtungen sind somit zusammen innerhalb eines gemeinsamen Bewegungsbereichs an einer Längsseite der Horizontalfördereinrichtung beweglich ausgebildet.

Gemäß einer anderen Ausführungsform weist jede der mindestens zwei im Bereich einer Längsseite der Horizontalfördereinrichtung angeordneten optischen Erfassungseinrichtungen einen eigenen Antrieb auf, so dass die mindestens zwei optischen Erfassungseinrichtungen jeweils ihren eigenen Bewegungsbereich im Bereich der Längsseite der Horizontalfördereinrichtung aufweisen und unabhängig voneinander im Bereich der Längsseite der Horizontalfördereinrichtung parallel zur Transportrichtung in oder entgegen der Transportrichtung bewegt werden können.

Bei einer Vorrichtung mit drei zuführenden Reihen an Stückgütern ist beispielsweise vorgesehen, dass zwei optischen Erfassungseinrichtungen an einer Seite der Horizontalfördereinrichtung parallelbeweglich zur Transportrichtung angeordnet sind, während eine dritte optische Erfassungseinrichtung dazu gegenüberliegend an der anderen Seite der Horizontalfördereinrichtung parallelbeweglich zur Transportrichtung angeordnet ist. Die mindestens drei optischen Erfassungseinrichtungen weisen jeweils unterschiedliche Erkennungsbereiche auf, insbesondere deckt eine erste optische Erfassungseinrichtung einen ersten Erkennungsbereich im Erfassungsbereich des mindestens einen Manipulators der Vorrichtung fluchtend zu einer ersten der mindestens drei Reihen ab, eine zweite optische Erfassungseinrichtung deckt einen zweiten Erkennungsbereich im Erfassungsbereich des mindestens einen Manipulators der Vorrichtung fluchtend zu einer zweiten der mindestens drei Reihen ab, eine dritte optische Erfassungseinrichtung deckt einen dritten Erkennungsbereich im Erfassungsbereich des mindestens einen Manipulators der Vorrichtung fluchtend zu einer dritten der mindestens drei Reihen ab usw.

Beispielsweise ist vorgesehen, dass die erste Erfassungseinrichtung Stückgüter der unmittelbar zur Längsseite der Horizontalfördereinrichtung benachbartem ersten Reihe erfasst, während die zweite Erfassungseinrichtung Stückgüter der mittleren Reihe erkennt. Die an der gegenüberliegenden Längsseite angeordnete dritte Erfassungseinrichtung erkennt dementsprechend Stückgüter der unmittelbar benachbarten dritten Reihe. Die unterschiedlichen Erkennungsbereiche ergeben sich aufgrund unterschiedlicher Anordnung und/oder Ausrichtung der optischen Erfassungseinrichtungen, insbesondere Sensoren o.ä. Die unterschiedlichen Erkennungsbereiche der ersten und dritten Erfassungseinrichtung ergeben sich insbesondere durch deren Anordnung an gegenüberliegenden Längsseiten der Horizontalfördereinrichtung. Die unterschiedlichen Erkennungsbereiche der mindestens zwei im Bereich einer Längsseite angeordneten Erfassungseinrichtungen geben sich beispielsweise durch eine Anordnung der mindestens zwei optischen Erfassungseinrichtungen in unterschiedlichen Höhen oberhalb der durch die Horizontalfördereinrichtung gebildeten Förderfläche oder Förderebene für die Stückgüter. Alternativ und/oder zusätzlich können die optischen Erfassungseinrichtungen derart angeordnet sein, dass sie einen jeweils unterschiedlichen Erfassungswinkel aufweisen und somit einen unterschiedlichen Erkennungsbereich auf der Horizontalfördereinrichtung abdecken.

Weiterhin wird eine Vorrichtung beschrieben, bei der mindestens eine der an gegenüberliegenden Längsseiten der Horizontalfördereinrichtung beweglich angeordneten Erfassungseinrichtung in vertikaler Richtung beweglich ausgebildet ist und in mindestens zwei unterschiedlichen Höhenniveaus oberhalb einer durch die Horizontalfördereinrichtung gebildeten Förderfläche angeordnet werden kann. Insbesondere kann die optische Erfassungseinrichtung in einer Mehrzahl von unterschiedlichen Höhenniveaus angeordnet werden, wobei die in unterschiedlichen Höhenniveaus angeordnete optische Erfassungseinrichtung jeweils unterschiedliche Erkennungsbereiche im Erfassungsbereich der Vorrichtung abdeckt. Insbesondere ist die mindestens eine vertikal verstellbare optische Erfassungseinrichtung derart einstellbar ausgebildet, dass sie einer ersten Arbeitsposition in einem ersten Höhenniveau angeordnet ist und einen ersten Erkennungsbereich fluchtend zu einer ersten der mindestens drei Reihen an Stückgütern abdeckt, wodurch beispielsweise Stückgüter einer ersten Reihe erfasst werden beispielsweise einer äußeren Reihe.

Weiterhin ist die optische Erfassungseinrichtung in einer zweiten Arbeitsposition in einem zweiten Höhenniveau angeordnet, so dass die optische Erfassungseinrichtung einen zweiten Erkennungsbereich fluchtend zu einer zweiten der mindestens drei Reihen an Stückgütern abdeckt, wodurch Stückgüter einer zweiten Reihe erfasst werden, beispielsweise einer inneren Reihe usw. Um die optische Erfassungseinrichtung von der ersten Arbeitsposition in die zweite Arbeitsposition zu überführen, kann beispielsweise nur die Höhe über der Förderfläche, in der die optische Erfassungseinrichtung angeordnet ist, verändert werden. Alternativ oder zusätzlich kann der Erfassungswinkel der optischen Erfassungseinrichtung durch Verschwenken derselben um eine Drehachse parallel zur Transportrichtung eingestellt werden.

Eine Ausführungsform der Erfindung sieht beispielsweise vor, dass Stückgüter in drei parallelen Reihen zum Gruppiermodul befördert werden. Innerhalb des Gruppiermoduls sind zwei bewegliche optische Erfassungseinrichtungen an gegenüberliegenden Längsseiten der Horizontalfördereinrichtung angeordnet, wobei eine erste der optischen Erfassungseinrichtungen vertikalbeweglich ausgebildet ist und in Abhängigkeit von der jeweiligen Arbeitshöhe Stückgüter der unmittelbar benachbarten ersten Reihe oder aber Stückgüter der mittleren zweiten Reihe erfassen kann, während die an der gegenüberliegenden Längsseite angeordnete zweite optische Erfassungseinrichtung jeweils Stückgüter der zu dieser unmittelbar benachbarten dritten Reihe erfassen kann.

Die Erfassung von Stückgütern durch die Manipulatoren und das Erfassen von Daten durch die beweglichen optischen Erfassungseinrichtungen wird in den Anmeldungen mit den Aktenzeichen DE 10 2016 213 400.0, DE 10 2016 124 250.0 und DE 10 2017 123 558.2 beschrieben, deren Offenbarung mit in die Beschreibung aufgenommen wird und als Bestandteil dieser Anmeldung anzusehen ist.

Mindestens eine der optischen Erfassungseinrichtungen wird beispielsweise durch mindestens einen Kantenscanner, insbesondere einen Laserkantenscanner, gebildet, welcher einer Steuer- und/oder Auswerteeinheit der Vorrichtung Raumkoordinaten und/oder Positions- und/oder Umrissdaten für ein bewegtes Stückgut liefert. Mit einem Kantenscanner sind detaillierte Positionsdaten erfassbar, so beispielsweise eine Schrägstellung und/oder andere Fehlpositionierung eines der Stückgüter, was ggf. bei der Erfassung durch den jeweiligen Manipulator korrigiert werden kann. Beispielsweise wird ein solcher Kantenscanner verwendet, um Raumkoordinaten und/oder Positions- und/oder Umrissdaten für das jeweils zuvorderst befindliche Stückgut und/oder einer in Transportrichtung nach vorne oder nach hinten weisender Umrisskante einer entsprechend der optischen Erfassungseinrichtung zugeordneten Reihe zu gewinnen.

Gemäß einer weiteren Ausführungsform ist mindestens eine optische Erfassungseinrichtung eine Kamera mit nachgeschalteter Bildauswertung, aus deren Daten die Steuer- und/oder Auswerteeinheit Raumkoordinaten und/oder Positions- und/oder Umrisswerte für ein bewegtes Stückgut gewinnt, insbesondere Raumkoordinaten und/oder Positions- und/oder Umrisswerte für das jeweils zuvorderst befindliche Stückgut und/oder dessen nach vorne oder nach hinten weisender Umrisskante einer entsprechend der optischen Erfassungseinrichtung zugeordneten Reihe.

Die genannten optischen Erfassungseinrichtungen bzw. Sensoreinrichtungen sind beispielhaft zu verstehen. Grundsätzlich können jedoch auch andere Sensorvarianten zum Einsatz kommen, so bspw. Ultraschallsensoren o. dgl. Weitere geeignete Sensoren können vom Fachmann ebenfalls vorteilhaft eingesetzt werden.

Die Manipulatoren sind weiterhin an die Steuer- und/oder Auswerteeinheit gekoppelt. Die Steuer- und/oder Auswerteeinheit der Vorrichtung steuert beispielsweise allgemein die Bewegung der Manipulatoren und/oder weiterer Maschinenbauteile der Vorrichtung. Vorzugsweise enthält die Steuer- und/oder Auswerteeinheit abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Die sensorisch ermittelten Daten werden an die Steuer- und/oder Auswerteeinheit übermittelt und der entsprechende Manipulator und/oder die Bewegungssteuerung des entsprechenden Manipulators und/oder weitere Förderkomponenten der Vorrichtung wie beispielsweise die mindestens eine zuführende Transporteinrichtung und/oder die Horizontalfördereinrichtung wird /werden zumindest während der Erfassung wenigstens eines bewegten Stückgutes, beispielsweise während der Erfassung des wenigstens einen zuvorderst angeordneten Stückgutes, und der räumlichen Abtrennung des wenigstens einen Stückgutes von den nachfolgenden Stückgütern auf Grundlage der von der Steuer- und/oder Auswerteeinheit gelieferten Koordinaten- und/oder Positionswerte kalibriert. Beispielsweise erfolgt die Kalibrierung anhand von Koordinaten- und/oder Positionswerten für die jeweils zuvorderst befindlichen Stückgüter und/oder deren nach vorne oder nach hinten weisender Umrisskanten.

Die sensorisch ermittelten Werte werden insbesondere verwendet, um vermittels der Steuer- und/oder Auswerteeinheit einen Bewegungsablauf zumindest eines der Manipulatoren zu berechnen und/oder den Bewegungsablauf gegebenenfalls anzupassen und/oder zu korrigieren. Die berechneten Werde dienen vorzugsweise der selektiven Ansteuerung, Aktivierung und/oder Bewegung der Klemm- oder Greifmittel des jeweiligen Manipulators durch die Steuer- und/oder Auswerteeinheit der Handhabungsvorrichtung. Weiterhin können die Daten verwendet werden, um die Geschwindigkeit der zuführenden Transporteinrichtung und/oder der weiterführenden Horizontalfördereinrichtung zumindest kurzzeitig zu erhöhen oder zu reduzieren, um die Position der in das Gruppiermodul einlaufenden Stückgüter innerhalb des Gruppiermoduls zu korrigieren etc.

Bei der Steuer- und/oder Auswerteeinheit kann es sich insbesondere um eine elektronische und/oder programmierbare Steuer- und/oder Auswerteeinheit wie beispielsweise eine SPS handeln. In dieser können unterschiedliche Rezepte / Daten abgelegt sein, mit welchen jeweils unterschiedliche Stückgüter - beispielsweise Sechser-Gebinde und Vierer- Gebinde - geklemmt, freigegeben und/oder realisiert werden können, insbesondere um die Stückgüter gemäß einem vorgegebenen Lagenschema anzuordnen und somit für eine nachfolgende Palettierung vorzubereiten oder um die Stückgüter auf eine andere Anzahl von weiterführenden Transportspuren zu verteilen und dabei gegebenenfalls um 90 Grad zu drehen. In diesem Fall übernimmt das Gruppiermodul die Funktion eines sogenannten Dreh- und Verteilsystems.

Ein wichtiger Aspekt der Erfindung besteht darin, dass bei einer mehrreihigen Stückgüterzuführung, insbesondere bei einer Zuführung in mindestens drei Reihen, die Stückgüter der mindestens einen mittleren Reihe durch mindestens zwei parallel zur Transportrichtung oder entgegen der Transportrichtung bewegliche eine optische Erfassungseinrichtung erfasst werden, die an einer Längsseite der Horizontalförderfläche beweglich angeordnet ist, so dass die optischen Erfassungseinrichtungen nicht in den Bewegungsablauf der mindestens zwei Manipulatoren eingreift.

Die Erfindung bezieht sich weiterhin auf ein Verfahren zum Umgang mit in mindestens drei parallelen Reihen bewegten Stückgütern, welches im Zusammenhang mit der Vorrichtung zum Umgang mit in mindestens drei parallelen Reihen bewegten Stückgütern bereits ausführlich beschrieben worden ist. Das Verfahren kann alternativ oder zusätzlich zu den beschriebenen Merkmalen ein oder mehrere Merkmale und/oder Eigenschaften der Vorrichtung sowie der oben detailliert beschriebenen unterschiedlichen Vorrichtungsvarianten umfassen. Ebenfalls kann die Vorrichtung alternativ oder zusätzlich einzelne oder mehrere Merkmale und/oder Eigenschaften des beschriebenen Verfahrens aufweisen. Bei dem Verfahren ist vorgesehen, dass wenigstens eine der optischen Erfassungseinrichtungen zum Erfassen der Daten von Stückgütern einer jeweilig zugeordneten Reihe parallel zur Transportrichtung in oder entgegen der Transportrichtung bewegt wird. Hierbei können die mindestens zwei optischen Erfassungseinrichtungen zeitgleich oder zeitlich versetzt bewegt werden. Insbesondere ist die Bewegung der mindestens zwei optischen Erfassungseinrichtungen jeweils auf den Manipulator abgestimmt, der in einem nachfolgenden Verfahrensschritt Stückgüter der jeweilig zugeordneten Reihe abgreifen soll.

Insbesondere ist bei dem Verfahren vorgesehen, dass mindestens zwei optische Erfassungseinrichtungen mindestens drei unterschiedliche Erkennungsbereiche im Erfassungsbereich der Vorrichtung abdecken, um Stückgüter der mindestens drei zuführenden Reihen erfassen zu können. Insbesondere entspricht die Anzahl an unterschiedlichen Erkennungsbereichen der Anzahl der zum Erfassungsbereich führenden Reihen an Stückgütern, wobei eine optische Erfassungseinrichtung einen oder mehrere Erkennungsbereiche abdecken kann.

Beispielhaft wird nunmehr die Erkennung von Positionsdaten eines Stückgutes einer Reihe durch eine optische Erfassungseinrichtung beschrieben. Die Stückgüter werden über die mindestens eine Transporteinrichtung dem Gruppiermodul zugeführt und auf der Horizontalfördereinrichtung des Gruppiermoduls weiterbewegt. Sobald die optische Erfassungseinrichtung die jeweiligen Parameter, beispielsweise die Vorderkante des zuvorderst angeordneten Stückgutes der zugeordneten Reihe, erfasst, kann vorgesehen sein, dass die ermittelte Position an die Steuer- und Auswerteeinheit übermittelt wird, die die ermittelten Daten beispielsweise verwendet, um die mindestens drei Reihen anzugleichen bzw. den Bewegungsablauf der Manipulatoren mit den einlaufenden Stückgütern zu synchronisieren. Weiterhin kann vorgesehen sein, dass die optische Erfassungseinrichtung zusammen mit dem Stückgut mitläuft, d.h. dass sich die optische Erfassungseinrichtung in derselben Geschwindigkeit wie das Stückgut in Transportrichtung bewegt. Wenn nun einer der Manipulatoren ein Stückgut oder einen Takt umfassend mehrere Stückgüter von dieser Reihe erfasst und von der Reihe abtrennt, bekommt die die optische Erfassungseinrichtung von der Steuer- und Auswerteeinheit ein Signal und wird entgegen der Transportrichtung bewegt, bis sie die Vorderkante oder ein anderes geeignetes Positionierungssignal des neuen zuvorderst angeordneten Stückgutes der Reihe erkennt usw.

Sind mindestens zwei optische Erfassungseinrichtungen bewegungstechnisch gekoppelt, kann es vorteilhaft sein, diese abwechselnd aktiv zu schalten, um eine saubere Signaltrennung und korrekte Positionsdaten für die jeweils zuvordersten Stückgüter der mindestens zwei den optischen Erfassungseinrichtungen zugeordneten Reihen zu erhalten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erste Anordnung einer automatisierten Positionserkennung und/oder Kalibrierung innerhalb eines Gruppiermoduls.
Fig. 2 zeigt eine Draufsicht auf eine erste Anordnung einer automatisierten Positionserkennung und/oder Kalibrierung innerhalb eines Gruppiermoduls gemäß Fig. 1.
Figuren 3 und 4 zeigen unterschiedliche Momentaufnahmen einer Anordnung mit einer automatisierten Positionserkennung und/oder Kalibrierung gemäß Fig. 1.
Fig. 5 zeigt eine zweite Anordnung einer automatisierten Positionserkennung und/oder Kalibrierung innerhalb eines Gruppiermoduls.
Fig. 6 zeigt eine dritte Anordnung einer automatisierten Positionserkennung und/oder Kalibrierung innerhalb eines Gruppiermoduls.
Fig. 7 zeigt eine weitere Verwendung einer ersten Anordnung gemäß Fig. 1.
Fig. 8 zeigt eine zweite Anordnung einer automatisierten Positionserkennung und/oder Kalibrierung gemäß Fig. 5 mit weiteren Ausführungsformen von Manipulatoren.
Fig. 9 zeigt eine vierte Anordnung mit einer automatisierten Positionserkennung und/oder Kalibrierung.

Für gleiche oder gleich wirkende Elemente der Erfindung werden identische Bezugszeichen verwendet. Teilweise werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

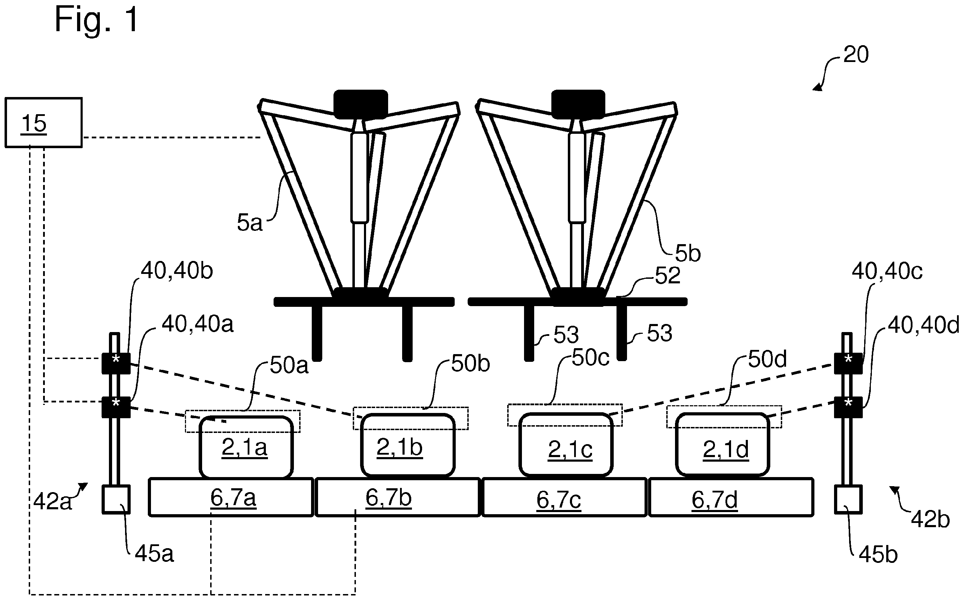

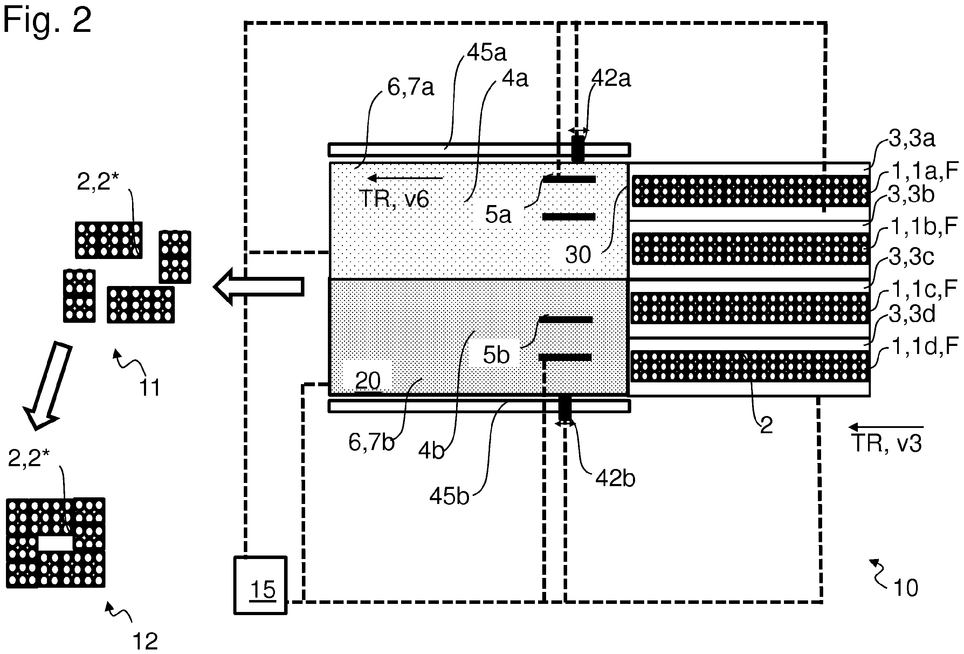

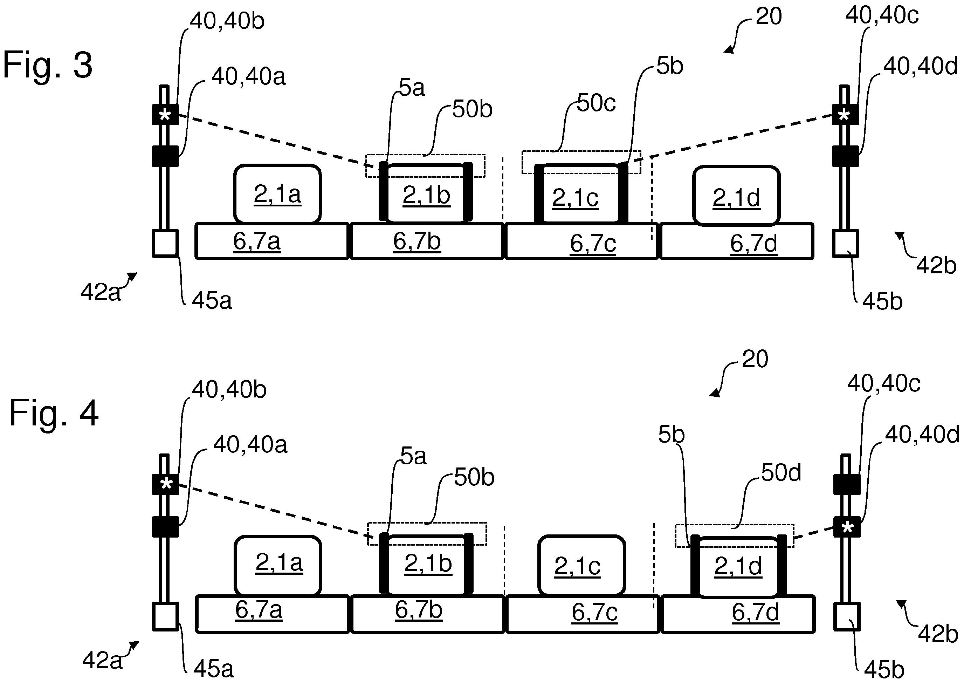

Die schematische Ansicht der Fig. 1 zeigt eine erste Anordnung einer automatisierten Positionserkennung und/oder Kalibrierung innerhalb eines Gruppiermoduls 20, Fig. 2 zeigt eine Draufsicht auf eine solche Anordnung und Figuren 3 und 4 zeigen unterschiedliche Momentaufnahmen der Anordnung. Insbesondere zeigt Fig. 2 eine Handhabungsvorrichtung 10 mit einer Anordnung gemäß Figuren 1, 3 und 4 von oben. Hierbei werden Stückgüter 2 in mindestens drei, insbesondere in vier, parallelen Reihen 1, 1a, 1b, 1c, 1d zu einem Gruppiermodul 20 der Handhabungsvorrichtung 10 zugeführt, in dem mindestens zwei Manipulatoren 5a, 5b zum Bearbeiten der Stückgüter 2 angeordnet sind. Bei den Stückgütern 2 handelt es sich im dargestellten Ausführungsbeispiel jeweils um Gebinde umfassend eine Mehrzahl von Getränkebehältern, die beispielsweise mit einer Schrumpfverpackung zusammengehalten werden.

Die Handhabungsvorrichtung 10 umfasst vier parallel angeordnete erste Transporteinrichtungen 3, 3a, 3b,3c, 3d über welche vorzugsweise unmittelbar aufeinanderfolgende Stückgüter 2 in vier parallelen Reihen 1, 1a, 1b, 1c, 1d in Transportrichtung TR unterbrechungsfrei und/oder mit im Wesentlichen kontinuierlicher Transportgeschwindigkeit v3 in einen Erfassungsbereich 4 der zwei beweg-, verschieb- und/oder rotierbaren Manipulatoren 5a, 5b der Handhabungsvorrichtung 10 transportiert werden. Insbesondere ist vorgesehen, dass den zwei parallelen Transporteinrichtungen 3a, 3b ein Erfassungsbereich 4a des Manipulators 5a und den anderen beiden parallelen Transporteinrichtungen 3c, 3d ein Erfassungsbereich 4b des Manipulators 5b zugeordnet ist. Hierbei kann vorgesehen sein, dass sich die Erfassungsbereiche 4a, 4b zumindest bereichsweise überschneiden. Die Transporteinrichtungen 3a, 3b, 3c, 3d werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 vorzugsweise keine bzw. nur eine geringfügige, gegebenenfalls prozessbedingte, Lücke besteht. Die Stückgüter 2 laufen somit in jeder der Reihen 1a, 1b, 1c, 1d jeweils in einer sogenannten geschlossenen Formation F in den Erfassungsbereich 4a, 4b des entsprechenden Manipulators 5a, 5b ein. Alternativ kann vorgesehen sein, dass die vier Reihen 1a, 1b, 1c, 1d über eine entsprechend breite gemeinsame Transporteinrichtung (nicht dargestellt) dem Gruppiermodul 20 zugeführt werden.

Jeder der zuführenden Transporteinrichtungen 3, 3a, 3b, 3c, 3d kann ein eigener Antrieb zugeordnet sein, so dass die Transporteinrichtungen 3a, 3b, 3c, 3d unabhängig voneinander durch die Steuerungseinrichtung 15 geregelt werden können. In der Regel werden die Transporteinrichtung 3a, 3b, 3c, 3d mit derselben konstanten Geschwindigkeit v3 betrieben, bei einer Unregelmäßigkeit in der lückenlosen Zufuhr der Stückgüter 2 kann dies durch ein kurzzeitiges Anpassen der jeweiligen Bandgeschwindigkeit korrigiert werden.

In dem Gruppiermodul 20 sind parallele Horizontalfördereinrichtungen 6, beispielsweise ein erstes Gruppierband 7a, ein zweites Gruppierband 7b, ein drittes Gruppierband 7c und ein viertes Gruppierband 7d (vgl. Figuren 1, 3 und 4) angeordnet und insbesondere den Erfassungsbereichen 4a, 4b der Manipulatoren 5a, 5b zugeordnet. Besonders bevorzugt ist der Erfassungsbereich 4a hauptsächlich den Gruppierbändern 7a und 7b zugeordnet und der Erfassungsbereich 4b ist hauptsächlich den Gruppierbändern 7c und 7d zugeordnet. Die auf der ersten Transporteinrichtung 3a herangeführten Stückgüter 2 werden auf das erste Gruppierband 7a überführt und weiter transportiert, die auf der zweiten Transporteinrichtung 3b herangeführten Stückgüter 2 werden auf das zweite Gruppierband 7b überführt und weiter transportiert usw. Jedem der Gruppierbänder 7a, 7b, 7c, 7d ist vorzugsweise ein eigener Antrieb zugeordnet, so dass die Gruppierbänder 7a, 7b, 7c, 7d unabhängig voneinander und/oder unabhängig von den jeweils zuführenden Transporteinrichtungen 3a, 3b, 3c, 3d durch die Steuerungseinrichtung 15 geregelt werden können. In der Regel werden die Gruppierbänder 7a, 7b, 7c, 7d mit derselben konstanten Geschwindigkeit v6 betrieben, bei einer Unregelmäßigkeit in der lückenlosen Zufuhr der Stückgüter 2 kann dies durch ein kurzzeitiges Anpassen der jeweiligen Bandgeschwindigkeit bspw. korrigiert werden. In der Regel werden die Transporteinrichtungen 3a, 3b, 3c und/oder 3d jeweils synchron mit dem in einer Flucht angeordneten Gruppierband 7a, 7b, 7c, 7d angesteuert und reguliert.

Die Manipulatoren 5a, 5b sind zum klemmenden und/oder kraft- und/oder formschlüssigen Entgegennehmen von Stückgütern 2 innerhalb des Gruppiermoduls 20 ausgebildet. Insbesondere werden durch die mindestens zwei Manipulatoren 5a, 5b die in mindestens drei Reihen in geschlossener Formation F einlaufenden Stückgüter 2 gemäß einem vorgegebenen Lagenschema auf der Horizontalfördereinrichtung 6 angeordnet, wobei die Stückgüter 2 entsprechend ihrer Anordnung innerhalb des zu erstellenden Lagenschemas gegebenenfalls gedreht werden. Hierbei kann vorgesehen sein, dass jeweils eine vorbereitete Stückgutlage 11 durch einen Manipulator 5a, 5b erzeugt wird. Es kann aber auch vorgesehen sein, dass die beiden Manipulatoren 5a, 5b beim Erstellen der Stückgutlage 11 zusammenarbeiten, so dass die vorbereitete Stückgutlage 11 Stückgüter 2 mehrerer, insbesondere aller, zuführenden Reihen 1a, 1b, 1c, 1d umfasst. In einem nachfolgenden, beispielsweise innerhalb eines Vorgruppierungsmoduls durchzuführenden, Verfahrensschritt kann es notwendig sein, die Stückgüter 2 der vorbereiteten Lage 11 zusammen zu schieben und eine kompakte Lage 12 zu bilden, die anschließend palettiert werden kann.

Zum Manipulieren der Stückgüter 2 umfassen die Manipulatoren 5a, 5b beispielsweise jeweils einen Klemmgreifer 52 mit zwei gegeneinander zustellbaren Klemmbacken 53, die ein schnelles Erfassen, Verschieben, Positionieren, Anheben und Freigeben der Stückgüter 2, 2* in der gewünschten Geschwindigkeit mit der gewünschten Stellpräzision erlauben. Bspw. können der Manipulatoren 5a, 5b als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sein, wie es beispielsweise in der Anmeldung mit dem Aktenzeichen DE 10 2016 206 639.0 beschrieben worden ist, deren Inhalt hiermit in diese Anmeldung aufgenommen wird und deren Inhalt dem Leser der vorliegenden Anmeldung als bekannt gelten soll. Das mindestens eine vom Manipulator 5a, 5b erfasste Stückgut 2 wird nachfolgend auch mit dem Bezugszeichen 2* gekennzeichnet. Beispielsweise greift der Manipulator 5a im Erfassungsbereich 4a mindestens ein Stückgut 2 von der über die Transporteinrichtung 3a oder 3b einlaufenden geschlossenen Reihe 1a oder 1b bzw. Formation F, trennt dieses von der einreihigen Formation F ab und überführt das abgetrennte Stückgut 2* bzw. eine abgetrennte Gruppe bzw. Takt von mindestens zwei lückenlos in Reihe angeordneten Stückgütern 2* in eine Zielposition P und/oder Zielausrichtung gemäß dem vorgegebenen Lagenschema. Dabei wird die das Stückgut 2* durch den Manipulator 5a in Transportrichtung TR von der Formation F der Stückgüter 2 der Reihe 1a oder 1b beabstandet, zudem kann das Stückgut 2* gegenüber den Stückgütern 2 der jeweiligen Formation F verdreht werden o.ä.

Im Gruppiermodul 20 wird jeweils mindestens ein Stückgut 2 oder eine Gruppe bzw. ein sogenannter Takt umfassend mindestens zwei Stückgüter 2 einer Reihe 1a, 1b, 1c, 1d durch einen der Manipulatoren 5a oder 5b gegriffen und verschoben, angehoben und/oder gedreht o.ä., um eine palettierfähige Lage oder eine Vorgruppierung 11 für eine palettierfähige Lage zu bilden. Alternativ können die Manipulatoren 5a, 5b auch als Dreh- und Verteilsystem dienen, um die in mindestens drei Reihen, insbesondere in vier Reihen 1a, 1b, 1c, 1d, einlaufenden Stückgüter 2 für die nachfolgende Bearbeitung auf mehr oder weniger Transportspuren zu verteilen und dabei gegebenenfalls um beispielsweise 90° zu verdrehen.

Damit der Manipulator 5 a, 5b das jeweilige Stückgut 2 bzw. den jeweiligen Takt korrekt greifen kann, ist es notwendig, die genaue Position des Stückgutes 2 innerhalb des Gruppiermoduls 20 zu kennen. Die Positionserkennung der Stückgüter 2 jeder Reihe 1a, 1b, 1c, 1d erfolgt mit Hilfe von mindestens zwei vorzugsweise beweglichen Sensoren 40, die an gegenüberliegenden Längsseiten der Horizontalfördereinrichtung 6 des Gruppiermoduls 20 angeordnet sind. Bei den mindestens zwei Sensoren kann es sich beispielsweise um beweglich ausgebildete und/oder angeordnete Lichtschranken, beweglich ausgebildete und/oder angeordnete Laserkantenscanner oder andere geeignete beweglich ausgebildete und/oder angeordnete optische Detektionsmittel handeln, die geeignet sind, bestimmte Parameter eines Stückgutes 2 und/oder bestimmte Parameter eines Taktes von Stückgütern 2 auf optischem Wege zu erkennen.

Bei dem in den Figuren 1 bis 4 dargestellten Ausführungsbeispiel sind insgesamt vier bewegliche Sensoren 40a, 40b, 40c, 40d vorgesehen, wobei der bewegliche Sensor 40a derart angeordnet, eingestellt und/oder ausgebildet ist, dass dieser jeweils Parameter der über die äußere Transporteinrichtung 3a auf das Gruppierband 7a einlaufenden Stückgüter 2 erkennt. Der bewegliche Sensor 40b ist derart angeordnet, eingestellt und/oder ausgebildet ist, dass dieser jeweils Parameter der über die innere Transporteinrichtung 3b auf das Gruppierband 7b einlaufenden Stückgüter 2 erkennt. Der bewegliche Sensor 40c ist derart angeordnet, eingestellt und/oder ausgebildet ist, dass dieser jeweils Parameter der über die innere Transporteinrichtung 3c auf das Gruppierband 7c einlaufenden Stückgüter 2 erkennt und der bewegliche Sensor 40d ist derart angeordnet, eingestellt und/oder ausgebildet ist, dass dieser jeweils Parameter der über die äußere Transporteinrichtung 3d auf das Gruppierband 7d einlaufenden Stückgüter 2 erkennt. Insbesondere erkennen die Sensoren 40a, 40b, 40c, 40d jeweils die Vorderkante 30 eines jeweilig in ihren Erkennungsbereich 50a, 50b, 50c, 50d einlaufenden Stückgutes 2 (Figuren 1, 2).

Die beweglichen Sensoren 40a, 40b, 40c, 40d sind insbesondere in Bewegungsbereichen 45a, 45b parallel zur Transportrichtung TR der Stückgüter 2 bzw. der Takte von jeweils mindestens zwei gruppierten Stückgütern 2 auf oder parallel zu der Horizontalfördereinrichtung 6 des Gruppiermoduls 20 beweglich. Die Bewegungsbereiche 45a, 45b werden jeweils durch einen Anfangspunkt und einen Endpunkt begrenzt und definieren somit die Länge frt Erkennungsbereiche 50a, 50b, 50c, 50d in Transportrichtung TR. Die Sensor 40a, 40b, 40c, 40d sind beispielsweise auf Laufschlitten angeordnet, die jeweils über eine Laufschiene, einen Zahnriemenantrieb o.ä. parallel zur Transportrichtung TR der Stückgüter 2 bzw. Takte zwischen dem Anfangspunkt und dem Endpunkt innerhalb der Bewegungsbereiche 45a, 45b verfahren werden können. Die Sensor 40a, 40b, 40c, 40d sind insbesondere nicht mechanisch an den Manipulator 5 gekoppelt. Weiterhin ist die Beweglichkeit der Sensoren 40a, 40b, 40c, 40d nicht an die Beweglichkeit des Manipulators 5 gekoppelt. Bei dem hier dargestellten Ausführungsbeispiel sind die Sensoren 40a, 40b auf einer gemeinsamen ersten Linearachse mit einem ersten Bewegungsbereich 45a angeordnet und bilden eine erste Sensoranordnung 42a. Weiterhin sind die Sensoren 40c, 40d auf einer gemeinsamen zweiten Linearachse mit einem zweiten Bewegungsbereich 45b angeordnet und bilden eine zweite Sensoranordnung 42b. Die Sensoren 40a und 40b werden innerhalb ihres jeweiligen Bewegungsbereichs 45a jeweils synchron in Transportrichtung TR oder entgegen der Transportrichtung TR bewegt. Dasselbe gilt für die antriebstechnisch gekoppelten Sensoren 40c und 40d. Insbesondere weist die Anordnung der Sensoren 40a, 40b und 40c, 40d jeweils einen eigenen Antrieb auf, über den die Sensoren 40a, 40b und 40c, 40d vorzugsweise parallel zur Transportrichtung TR der einlaufenden Stückgüter 2 oder entgegen der Transportrichtung TR der einlaufenden Stückgüter 2 bewegt werden können.

Die beweglichen Sensoren 40a, 40b, 40c, 40d erkennen mindestens einen bestimmten Parameter des zuvorderst in den Erkennungsbereich einlaufenden Stückgutes 2 der jeweilig dem Sensor 40a, 40b, 40c, 40d zugeordneten Reihe 1a, 1b, 1c, 1d. Beispielsweise erkennen die Sensoren 40a, 40b, 40c, 40d jeweils eine Vorderkante 30 des jeweilig vorauslaufenden Stückgutes 2 der zugeordneten Reihe 1a, 1b, 1c, 1d.

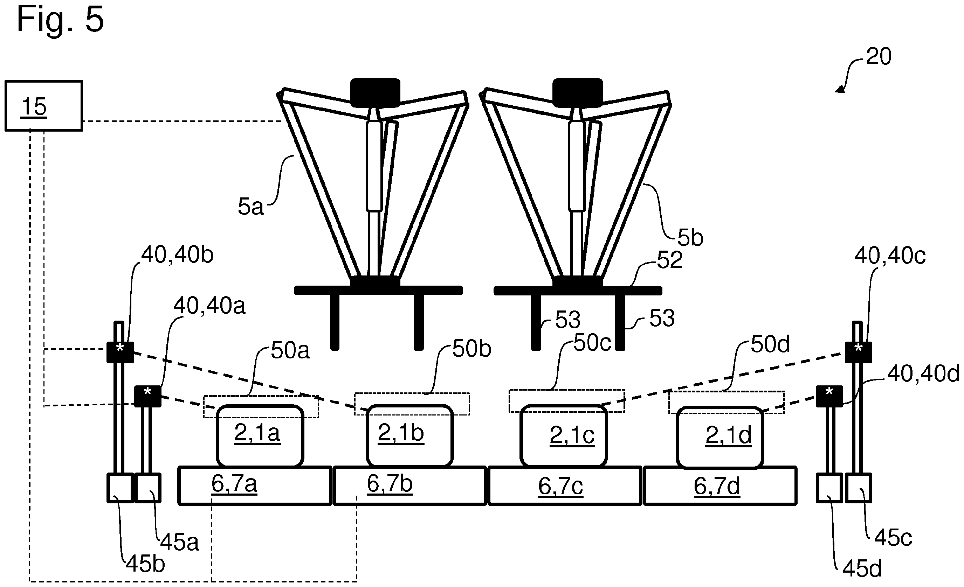

Die Sensoren 40a, 40b, 40c, 40d können jeweils immer nur zeitweise aktiv sein, um entsprechende Daten zu erfassen und an eine Steuerungseinrichtung 15 zu übermitteln (vgl. Figuren 3 und 4). Ein aktiv geschalteter Sensor 40a, 40b, 40c, 40d ist jeweils durch einen Stern * gekennzeichnet. Figuren 3 und 4 zeigen, dass spätestens beim Abgreifen eines Stückgutes 2 einer Reihe 1b, 1c gemäß Fig. 3 oder einer Reihe 1b, 1d gemäß Fig. 4 durch die Manipulatoren 5a, 5b die jeweilig der Reihe 1b, 1c oder der Reihe 1b, 1d zugeordneten Sensor 40b, 40c oder 40b, 40d aktiv geschaltet werden, um direkt nach dem Abtrennen des mindestens einen Stückgutes 2 durch jeweils einen Manipulator 5a, 5b die Vorderkante 30 (vgl. Fig. 5) des nunmehr vordersten Stückgutes 2 der jeweiligen Reihe 1b, 1c oder 1b, 1d und somit die genaue Position der jeweilig vordersten Stückgüter 2 innerhalb des Gruppiermoduls 20 zu ermitteln. Die derart erfassten Daten werden an die Steuerungseinrichtung 15 übermittelt und von dieser verwendet, um beispielsweise bei Abweichung der Ist- Position von einer Soll- Position, eine Korrektur des vorprogrammierten Bewegungsablaufes der Manipulatoren 5a, 5b zu berechnen. Alternativ und/oder zusätzlich können aufgrund der erfassten Daten auch die jeweiligen Transporteinrichtungen 3b, 3c oder 3b, 3d und/oder die jeweiligen Gruppierbänder 7b, 7c oder 7b, 7d angesteuert und reguliert werden, um gegebenenfalls einen ermittelten Versatz zwischen der Ist- Position des zuvordersten Stückgutes 2 und einer vordefinierten Soll- Position auszugleichen.

Bei der in Fig. 3 gezeigten Variante bzw. Phase sind die Sensoren 40b, 40c aktiv, um nach Abgreifen mindestens eines Stückgutes 2 der Reihen 1b, 1c die Position des nunmehr zuvorderst angeordneten Stückgutes 2 der Reihen 1b, 1c zu ermitteln.

Bei der in Fig. 4 gezeigten Variante bzw. Phase sind dagegen die Sensoren 40b, 40d aktiv, um nach Abgreifen mindestens eines Stückgutes 2 der Reihen 1b, 1d die Position des nunmehr zuvorderst angeordneten Stückgutes 2 der Reihen 1b, 1d zu ermitteln.

Bei der hier dargestellten Ausführungsform von Sensoranordnungen 42a, 42b ist vorzugsweise vorgesehen, dass der Sensor 40a der Sensoranordnung 42 unmittelbar benachbart zum Gruppierband 7a und in einem ersten Höhenniveau oberhalb der durch die Gruppierbänder 7a, 7b, 7c, 7d gebildeten Förderfläche für die Stückgüter 2 angeordnet ist. Dagegen ist der Sensor 40b zur Erfassung von Stückgütern 2 auf dem durch das Gruppierband 7a beabstandeten Gruppierband 7b in einem zweiten, insbesondere höheren, Höhenniveau oberhalb der Förderfläche angeordnet. Weiterhin ist der Sensor 40d der Sensoranordnung 42b unmittelbar benachbart zum Gruppierband 7d und in einem ersten Höhenniveau oberhalb der durch die Gruppierbänder 7a, 7b, 7c, 7d gebildeten Förderfläche für die Stückgüter 2 angeordnet ist. Dagegen ist der Sensor 40c zur Erfassung von Stückgütern 2 auf dem durch das Gruppierband 7d beabstandeten Gruppierband 7c in einem zweiten, insbesondere höheren, Höhenniveau oberhalb der Förderfläche angeordnet. Die Sensoranordnung 42a, 42b sind einander gegenüberliegend an Längsseiten der Förderfläche parallelbeweglich zur Transportrichtung der Stückgüter 2 auf den zuführenden Transporteinrichtungen 3a, 3b, 3c, 3d angeordnet. Die Anordnung der Sensoren 40a, 40b, 40c, 40d in unterschiedlichen Höhenniveaus und/oder mit unterschiedlichen Erkennungsbereichen 50a, 50b, 50c, 50d und/oder Erfassungswinkeln ist insbesondere vorteilhaft, um sicherzustellen, dass die Sensoren 40a, 40b, 40c, 40d jeweils nur die Vorderkanten 30 der Stückgüter 2 der jeweils zugeordneten Reihen 1a, 1b, 1c, 1d erfassen. Dies ist insbesondere notwendig, um Fehler in der Zuordnung zu vermeiden.

Die schematische Ansicht der Fig. 5 zeigt eine zweite Anordnung einer automatisierten Positionserkennung und/oder Kalibrierung innerhalb eines Gruppiermoduls 20. Es wird nachfolgend im Wesentlichen nur auf die Unterschiede zu dem in den Figuren 1 bis 4 dargestellten Ausführungsbeispiel eingegangen. In Bezug auf die allgemeine Beschreibung der Handhabungsvorrichtung 10 wird auf die Figurenbeschreibung zu den Figuren 1 bis 4 verwiesen.

Bei dem hier dargestellten Ausführungsbeispiel sind die Sensoren 40a, 40b, 40c, 40d jeweils auf einer eigenen Linearachse angeordnet, wobei die Sensoren 40a, 40b unmittelbar benachbart zum Gruppierband 7a angeordnet sind und wobei die Sensoren 40c, 40d dazu gegenüberliegend unmittelbar benachbart zum Gruppierband 7d angeordnet sind. Somit können die Sensoren 40a, 40b, 40c, 40d jeweils unabhängig voneinander innerhalb ihres jeweiligen, durch die jeweilige Laufschiene definierten Bewegungsbereichs 45a, 45b, 45c, 45d parallel zur und in Transportrichtung TR oder entgegen der Transportrichtung TR bewegt werden.

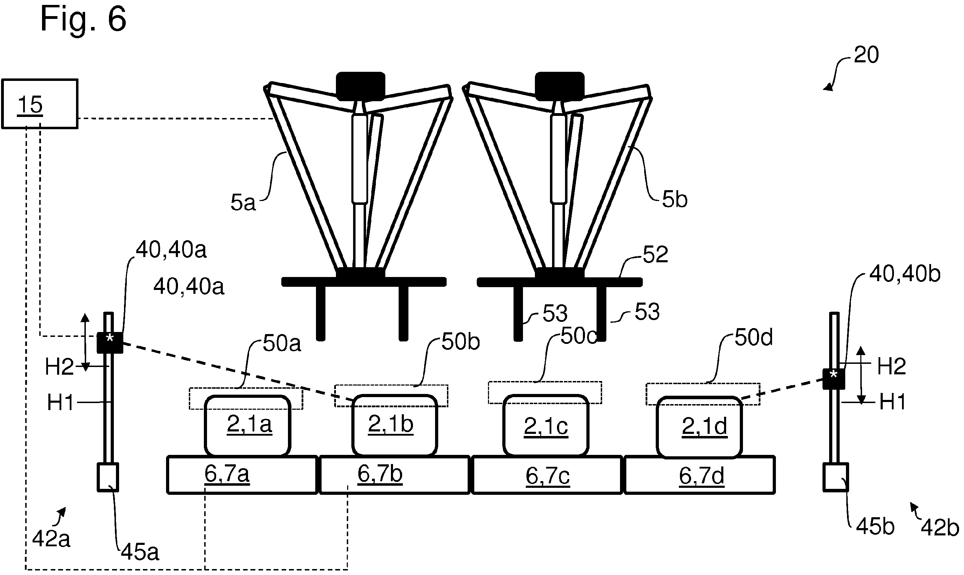

Die schematische Ansicht der Fig. 6 zeigt eine dritte Anordnung einer automatisierten Positionserkennung und/oder Kalibrierung innerhalb eines Gruppiermoduls 20. Hierbei werden für die Erfassung von Stückgütern 2 innerhalb von vier zulaufenden Reihen 1a, 1b, 1c, 1d nur zwei an gegenüberliegenden Längsseiten der Horizontalfördereinrichtung 6 angeordnete Sensoren 40a, 40b verwendet. Der Sensor 40a ist insbesondere direkt benachbart zum Gruppierband 7a außerhalb der durch die Gruppierbänder 7a, 7b, 7c, 7d gebildeten Förderfläche in einem Bewegungsbereich 45a parallel zu diesem beweglich angeordnet und der Sensor 40b ist insbesondere direkt benachbart zum Gruppierband 7d außerhalb der durch die Gruppierbänder 7a, 7b, 7c, 7d gebildeten Förderfläche in einem Bewegungsbereich 45b parallel zu diesem beweglich angeordnet. Weiterhin können die Sensoren 40a, 40b der Sensoranordnungen 42a, 42b jeweils in unterschiedlichen Höhenniveaus oberhalb der Förderfläche für die Stückgüter 2 angeordnet werden.

Die Anordnung in unterschiedlichen Höhenniveaus ermöglicht insbesondere eine Veränderung des Erkennungsbereiches. Beispielsweise deckt der Sensor 40a in einer ersten Höhe H1 einen Erkennungsbereich 50a ab, der dem der Sensoranordnung 42a direkt benachbarten Gruppierband 7a zugeordnet ist, so dass der ein erster Höhe H1 angeordnete Sensor 40a jeweils die Vorderkante 30 von einlaufenden Stückgütern 2 der Reihe 1a erfassen kann. Dagegen deckt der in einer zweiten Höhe H2 angeordnete Sensor 40a einen Erkennungsbereich 50b ab, der dem von der Sensoranordnung 42a beabstandet angeordneten Gruppierband 7b zugeordnet ist, so dass der ein zweiter Höhe H2 angeordnete Sensor 40a jeweils die Vorderkante 30 von einlaufenden Stückgütern 2 der Reihe 1b erfassen kann. Weiterhin deckt der Sensor 40b in einer ersten Höhe H1 einen Erkennungsbereich 50d ab, der dem der Sensoranordnung 42b direkt benachbarten Gruppierband 7d zugeordnet ist, so dass der ein erster Höhe H1 angeordnete Sensor 40b jeweils die Vorderkante 30 von einlaufenden Stückgütern 2 der Reihe 1d erfassen kann. Dagegen deckt der in einer zweiten Höhe H2 angeordnete Sensor 40b einen Erkennungsbereich 50c ab, der dem von der Sensoranordnung 42b beabstandet angeordneten Gruppierband 7c zugeordnet ist, so dass der ein zweiter Höhe H2 angeordnete Sensor 40b jeweils die Vorderkante 30 von einlaufenden Stückgütern 2 der Reihe 1c erfassen kann.

Auch bei dieser Ausführungsform werden die ermittelten Sensordaten verwendet, um das Bewegungsprofil der Manipulatoren 5a, 5b anzupassen und/oder um die zuführenden Transporteinrichtungen und/oder die weiterführenden Gruppierbänder 7, 7b, 7c, 7d der Horizontalfördereinrichtung 6 entsprechend zu korrigieren und/oder auszuregulieren.

Bei den Sensoranordnungen 42a, 42b mit höhenverstellbaren Sensoren 40a, 40b, die beispielsweise jeweils an einem vertikalen Rahmenelement verschieblich angeordnet sind, kann auch vorgesehen sein, dass anstelle oder zusammen mit der Höhenverstellung eine Verstellung des Erfassungswinkels des Sensors 40 erfolgt, um den jeweiligen Erkennungsbereich 50a, 50b, 50c, 50d besser einstellen zu können.

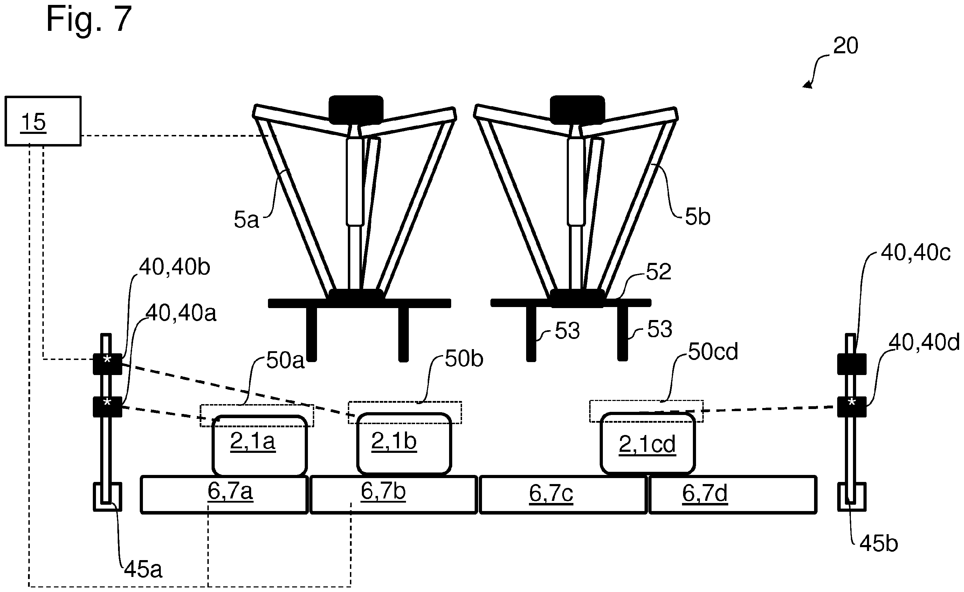

Die schematische Ansicht der Fig. 7 zeigt eine weitere Verwendung einer ersten Anordnung gemäß Fig. 1. Hierbei sind zwar vier zuführende Transporteinrichtungen (nicht dargestellt) und vier weiterführende Gruppierbänder 7a, 7b, 7c, 7d vorgesehen, jedoch werden Stückgüter 2 nur in drei Reihen 1a, 1b, 1cd befördert und dem Gruppiermodul 20 zugeführt. Insbesondere werden Stückgüer 2 der Reihe 1cd über die synchron laufenden Transporteinrichtungen 3c,3d und synchron laufenden Gruppierbänder 7c, 7d befördert. Alternativ kann es für einige Ausführungsformen sinnvoll sein, wenn Stückgüter 2 über die Transporteinrichtungen 3a, 3b, 3c den Gruppierbändern 7a, 7b, 7c zugeführt werden, oder wenn Stückgüter über die Transporteinrichtungen 3a, 3b, 3d den Gruppierbändern 7a, 7b, 7d zugeführt werden (vgl. Fig. 2) o.ä. Bei der Ausführungsform kann vorteilhaft vorgesehen sein, dass der erste Manipulator 5a jeweils Stückgüter 2 der Reihen 1a oder 1b abgreift, während der zweite Manipulator 5b nur Stückgüter 2 der dritten Reihe 1cd erfasst. Alternativ kann vorgesehen sein, dass der zweite Manipulator 5b auch Stückgüter 2 der Reihe 1b erfassen kann.

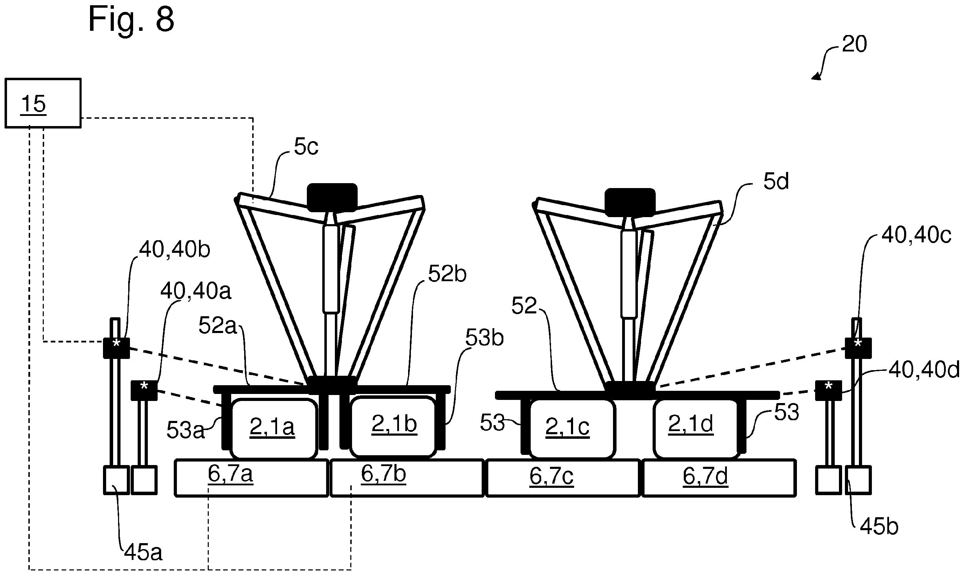

Die schematische Ansicht der Fig. 8 zeigt eine zweite Anordnung einer automatisierten Positionserkennung und/oder Kalibrierung gemäß Fig. 5 mit weiteren Ausführungsformen von Manipulatoren 5c, 5d. Beide Manipulatoren 5c, 5d sind jeweils als Doppelgreifer ausgebildet. Der Manipulator 5c umfasst zwei Klemmgreifer 52a, 52b mit jeweils zwei gegeneinander zustellbaren Klemmbacken 53a, 53b. Hierbei kann vorgesehen sein, dass der Abstand zwischen den Klemmgreifern 52a, 52b nach Abgreifen der Stückgüter 2 von den beiden Reihen 1a, 1b verändert werden kann, so dass der Abstand zwischen den erfassten Stückgütern 2 in der Zielposition gegenüber der Ausgangsposition verändert ist. Weiterhin kann vorgesehen sein, dass die Klemmgreifer 52a, 52b unabhängig voneinander drehbar am Manipulator 5c befestigt sind, so dass die Ausrichtung der Stückgüter 2 der beiden Reihen 1a, 1b relativ zueinander in der Zielposition gegenüber der Ausrichtung der Stückgüter 2 der beiden Reihen 1a, 1b auf den zuführenden Transporteinrichtungen verändert werden kann.

Der Manipulator 5d kann ebenfalls parallel zugeführte Stückgüter 2 von zwei Reihen 1c, 1d gleichzeitig abgreifen. Hierfür umfasst der Manipulator 5d einen Klemmgreifer 52 mit zwei gegeneinander zustellbaren Klemmbacken 53, die derart weit voneinander beabstandet werden können, dass zwischen den Klemmbacken 53 mindestens zwei Stückgüter 2 der nebeneinander angeordneten Reihen 1c, 1d erfasst werden können. Anschließend werden die Klemmbacken 53 gegeneinander zugestellt, bis die Stückgüter 2 der beiden benachbarten Reihen 1a, 1b einander kontaktieren, so dass die beiden nebeneinander zwischen den beiden Klemmbacken 53 angeordneten Stückgüter 2 der beiden Reihen 1c, 1d sicher geklemmt sind. Diese können nunmehr gemeinsam in eine Zielposition und/oder Zielausrichtung verbracht werden. Dabei können die mindestens zwei Stückgüter 2 nur gemeinsam gedreht werden. Zudem ist mit einem solchen Manipulator 5d kein definierter Abstand zwischen den aus unterschiedlichen Reihen 1c, 1d stammenden, gleichzeitig erfassten Stückgütern 2 in der Zielposition einstellbar. Diese sind in der Zielposition insbesondere immer einander kontaktierend angeordnet.

Auch bei Verwendung solcher Manipulators 5c, 5d mit Doppelgreifern kann es vorteilhaft sein, eine Ausführungsform mit gemeinsam beweglichen Sensoren 40a, 40b gemäß Figuren 1 bis 4 zu verwenden. Insbesondere kann es je nach zu erstellendem Lagenschema und/oder gewünschtem Bewegungsablauf der Manipulatoren auch vorteilhaft sein, zwei Manipulatoren 5c mit Doppelgreifer oder zwei Manipulatoren 5d mit zum Doppelgreifen ausgebildetem Klemmgreifer 52 oder eine Kombination aus einem der im Zusammenhang mit Fig. 8 beschrieben Manipulatoren 5c, 5d mit einem vorherig beschriebenen Manipulator 5a, 5b zu verwenden.

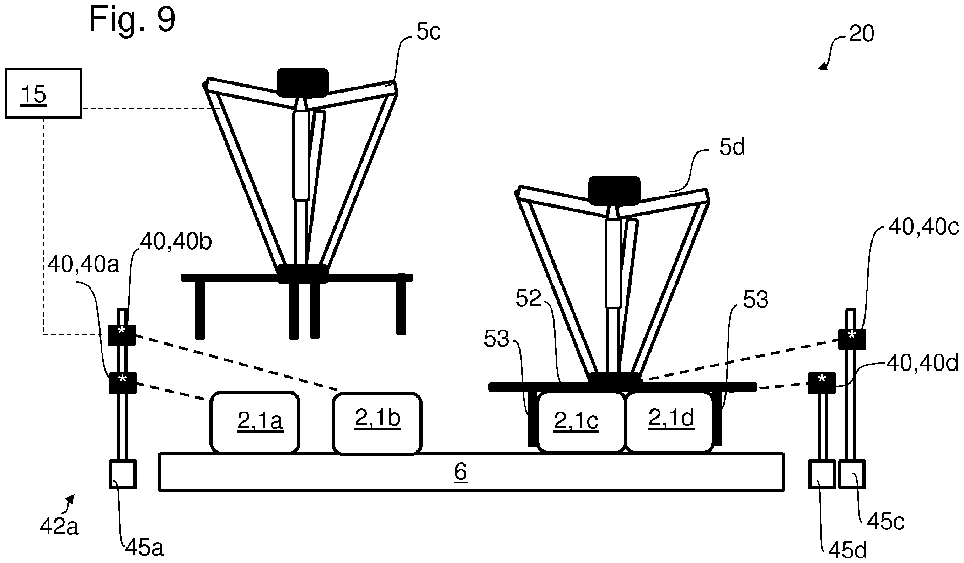

Die schematische Ansicht der Fig. 9 zeigt eine vierte Anordnung mit einer automatisierten Positionserkennung und/oder Kalibrierung. In diesem Fall finden zwei Manipulatoren 5c, 5d Anwendung, wie sie im Zusammenhang mit Fig. 8 beschrieben worden sind. Insbesondere zeigt Fig. 9 das Zusammenschieben der Stückgüter 2 der Reihen 1c, 1d durch die Klemmbacken 53 des zweiten Manipulators 5d. Zur Erfassung von Stückgütern 2 der Reihen 1a, 1b ist benachbart zum Gruppierband 7a eine Sensoranordnung 42a vorgesehen, bei der zwei Sensoren 40a, 40b über eine Linearachse beweglich innerhalb eines gemeinsamen Bewegungsbereichs 45a ausgebildet sind. Dagegen sind die Sensoren 40c, 40d zur Erfassung von Stückgütern 2 der Reihen 1c, 1d unabhängig voneinander mit eigenem Linearantrieb ausgestattet und benachbart zum Gruppierband 7d angeordnet. Die Sensoren 40c, 40d können insbesondere unabhängig voneinander innerhalb ihrer jeweiligen Bewegungsbereiche 45c, 45d parallel zur Transportrichtung TR (vgl. Fig. 2) bewegt werden.

Im Unterschied zu den vorbeschriebenen Beispielen ist in diesem Ausführungsbeispiel innerhalb des Gruppiermoduls 20 nur eine Horizontalfördereinrichtung 6 vorgesehen, auf der die in vier Reihen 1a, 1b, 1c, 1d einlaufenden Stückgüter 2 weiter in Transportrichtung bewegt werden und durch Manipulation vermittels eines der Manipulatoren 5c, 5d in eine Zielposition und/oder Zielanordnung gemäß einem vorgegebenen Lagenschema verbracht werden können. Dabei können die Stückgüter 2 über vier parallele Transporteinrichtungen (nicht dargestellt) in das Gruppiermodul 20 einlaufen. Es kann aber auch vorgesehen sein, dass die vier parallelen Reihen 1a, 1b, 1c, 1d auf einer einzigen, entsprechend breiten Transporteinrichtung zugeführt werden oder dass beispielsweise jeweils zwei parallele Reihen 1a, 1b und 1c, 1d über zwei entsprechende Transporteinrichtungen einlaufen usw.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Erläuterung der Figuren 1 bis 9 generell von "schematischen" Darstellungen und Ansichten die Rede ist, so ist damit keineswegs gemeint, dass die Figurendarstellungen hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter und/oder Teilen der Vorrichtung oder anderer gezeichneter Elemente in irgendeiner Weise in seinem Verständnis beeinträchtigt wäre. Die Figuren 1 bis 9 ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Es sei an dieser Stelle abschließend nochmals festgehalten, dass die Erfindung grundsätzlich unter Bezugnahme auf eine bevorzugte Ausführungsform bzw. auf mehrere bevorzugte Ausführungsformen beschrieben wurde.

### Bezugszeichenliste

- 1; 1a, 1b, 1c, 1d: Reihe
- 2: Stückgut
- 2*: erfasstes Stückgut
- 3; 3a; 3b, 3c, 3d: Transporteinrichtung
- 4a, 4b: Erfassungsbereich
- 5a, 5b, 5c, 5d: Manipulator
- 6: Horizontalfördereinrichtung
- 7a, 7b, 7c, 7d: Gruppierband
- 10: Handhabungsvorrichtung
- 11: vorbereitete Stückgutlage, Vorgruppierung für palettierfähige Lage
- 12: kompakte Lage
- 15: Steuerungseinrichtung
- 20: Gruppiermodul
- 30: Vorderkante
- 40; 40a, 40b, 40c, 40d: Sensor
- 42a, 42b: Sensoranordnung
- 45; 45a, 45b, 45c, 45d: Bewegungsbereich
- 50a; 50b, 50c, 50d: Erkennungsbereich
- 52, 52a, 52b: Klemmgreifer
- 53, 53a, 53b: Klemmbacke
- H1: erste Höhe
- H2: zweite Höhe
- TR: Transportrichtung
- v3: Transportgeschwindigkeit
- v6: Geschwindigkeit / Fördergeschwindigkeit

## Patentansprüche

1. Vorrichtung (10) zum Umgang mit in mindestens drei parallelen Reihen (1) bewegten Stückgütern (2), umfassend
- wenigstens eine Transporteinrichtung (3), über welche die bewegten Stückgüter (2) in mindestens drei Reihen (1) in einer Transportrichtung (TR) zu Erfassungsbereichen (4) der mindestens zwei Manipulatoren (5) transportierbar sind,
- wobei die Vorrichtung (10) mindestens zwei unabhängig voneinander ansteuer- und bewegbare Manipulatoren (5) für Stückgüter (2) umfasst,
- wobei den Erfassungsbereichen (4) der mindestens zwei Manipulatoren (5) mindestens eine, sich jeweils an die Transporteinrichtungen (3) fluchtend anschließende Horizontalfördereinrichtung (6) zugeordnet ist, welche die in die Erfassungsbereiche (4) gelangenden und dort mittels der Manipulatoren (5) gedrehten und/oder verschobenen Stückgüter (2) in Transportrichtung (TR) transportiert, **gekennzeichnet durch**
- wenigstens zwei den Erfassungsbereichen (4) und/oder Bewegungsräumen der wenigstens zwei Manipulatoren (5) zugeordnete bewegbare optische Erfassungseinrichtungen (40), die jeweils zur Gewinnung von Raumkoordinaten und/oder Positions- und/oder Umrissdaten wenigstens eines in Transportrichtung (TR) bewegten Stückgutes (2) der wenigstens drei Reihen (1) vorbereitet und ausgestattet sind,
- wobei die wenigstens zwei optischen Erfassungseinrichtungen (40) an einander gegenüberliegenden Längsseiten der Horizontalfördereinrichtung (6) parallel zur Transportrichtung (TR) in oder entgegen der Transportrichtung (TR) beweglich ausgebildet sind,
- wobei zumindest die Manipulatoren (5) und/oder weitere Förderkomponenten der Vorrichtung (10) auf Grundlage der Raumkoordinaten und/oder Positions- und/oder Umrissdaten kalibrierbar und/oder steuerbar ist/sind.

2. Vorrichtung nach Anspruch 1, die eine Mehrzahl an optischen Erfassungseinrichtungen (40) umfasst, wobei die Anzahl an optischen Erfassungseinrichtungen (40) der Anzahl von zugeführten Reihen (1) von Stückgütern (2) entspricht.

3. Vorrichtung nach Anspruch 1 oder 2, die mindestens drei optische Erfassungseinrichtungen (40) umfasst, wobei mindestens zwei optische Erfassungseinrichtungen (40) im Bereich einer Längsseite der Horizontalfördereinrichtung (6) angeordnet sind.

4. Vorrichtung nach Anspruch 3, bei der die mindestens zwei optischen Erfassungseinrichtungen (40) im Bereich einer Längsseite der Horizontalfördereinrichtung (6) einen gemeinsamen Antrieb und einen gemeinsamen Bewegungsbereich (45) umfassen.

5. Vorrichtung nach Anspruch 3, bei der die mindestens zwei optischen Erfassungseinrichtungen (40) im Bereich einer Längsseite der Horizontalfördereinrichtung (6) jeweils einen eigenen Antrieb und einen eigenen Bewegungsbereich (45) umfassen.

6. Vorrichtung nach einem der Ansprüche 3 bis 5, bei der die mindestens zwei im Bereich einer Längsseite der Horizontalfördereinrichtung (6) angeordneten optischen Erfassungseinrichtungen (40) jeweils unterschiedliche Erkennungsbereiche (50) im Erfassungsbereich (4) der Vorrichtung (10) abdecken, insbesondere wobei eine erste optische Erfassungseinrichtung (40) einen ersten Erkennungsbereich (50) im Erfassungsbereich (4) der Vorrichtung (10) fluchtend zu einer ersten der mindestens drei Reihen (1) an Stückgütern (2) abdeckt, und wobei eine zweite optische Erfassungseinrichtung (40) einen zweiten Erkennungsbereich (50) im Erfassungsbereich (4) der Vorrichtung (10) fluchtend zu einer zweiten der mindestens drei Reihen (1) an Stückgütern (2) abdeckt.

7. Vorrichtung nach Anspruch 6, bei der die mindestens eine optische Erfassungseinrichtung (40) im Bereich der gegenüberliegenden Längsseite der Horizontalfördereinrichtung (6) einen weiteren Erkennungsbereich (50) im Erfassungsbereich (40) der Vorrichtung (10) abdeckt, insbesondere einen dritten Erkennungsbereich (50) im Erfassungsbereich (4) der Vorrichtung (10) fluchtend zu einer dritten der mindestens drei Reihen (1) an Stückgütern (2).

8. Vorrichtung nach einem der Ansprüche 3 bis 7, bei der die mindestens zwei optischen Erfassungseinrichtungen (40) im Bereich einer Längsseite der Horizontalfördereinrichtung (6) in unterschiedlichen Höhen oberhalb einer durch die Horizontalfördereinrichtung (6) gebildeten Förderfläche oder Förderebene für die Stückgüter (2) angeordnet sind.

9. Vorrichtung nach einem der Ansprüche 1 bis 8, bei der mindestens eine optische Erfassungseinrichtung (40) in vertikaler Richtung beweglich ausgebildet ist und in mindestens zwei unterschiedlichen Höhenniveaus oberhalb einer durch die Horizontalfördereinrichtung (6) gebildeten Förderfläche anordenbar ist.

10. Vorrichtung nach Anspruch 9, bei der die in mindestens zwei unterschiedlichen Höhenniveaus anordenbare optische Erfassungseinrichtung (40) mindestens zwei unterschiedliche Erkennungsbereiche (50) im Erfassungsbereich (4) der Vorrichtung (10) abdeckt, insbesondere wobei die in einem ersten Höhenniveau (H1) angeordnete optische Erfassungseinrichtung (40) einen ersten Erkennungsbereich (50) im Erfassungsbereich (4) der Vorrichtung (10) fluchtend zu einer ersten der mindestens drei Reihen (1) an Stückgütern (2) abdeckt, und wobei die in einem zweiten Höhenniveau (H2) angeordnete optische Erfassungseinrichtung (40) einen zweiten Erkennungsbereich (50) im Erfassungsbereich (4) der Vorrichtung (10) fluchtend zu einer zweiten der mindestens drei Reihen (1) an Stückgütern (2) abdeckt.

11. Vorrichtung nach einem der voranstehenden Ansprüche, bei der mindestens eine optische Erfassungseinrichtung (40) durch mindestens einen Kantenscanner gebildet ist, welcher der Steuer- und/oder Auswerteeinheit (12) Raumkoordinaten und/oder Positions- und/oder Umrissdaten für ein bewegtes Stückgut (2) der jeweilig zugeordneten Reihe (1) liefert, insbesondere Raumkoordinaten und/oder Positions- und/oder Umrissdaten für das jeweils zuvorderst befindliche Stückgut (2) der jeweilig zugeordneten Reihe (1) und/oder einer in Transportrichtung (TR) nach vorne oder nach hinten weisender Umrisskante (30) liefert und/oder bei der mindestens eine optische Erfassungseinrichtung (40) durch mindestens eine Kamera mit nachgeschalteter Bildauswertung gebildet ist, aus deren Daten die Steuer- und/oder Auswerteeinheit (12) Raumkoordinaten und/oder Positions- und/oder Umrisswerte für ein bewegtes Stückgut (2) der jeweilig zugeordneten Reihe (1) gewinnt, insbesondere Raumkoordinaten und/oder Positions- und/oder Umrisswerte für das jeweils zuvorderst befindliche Stückgut (2) der jeweilig zugeordneten Reihe (1) und/oder dessen in Transportrichtung (TR) nach vorne oder nach hinten weisender Umrisskante (30).

12. Verfahren zum Umgang mit in mindestens drei parallelen Reihen (1) bewegten Stückgütern (2), wobei die Stückgüter (2) zu einem Erfassungsbereich (4) von wenigstens zwei unabhängig voneinander ansteuer- und bewegbaren Manipulatoren (5) transportiert werden;
- wobei im Erfassungsbereich (4) wenigstens ein transportiertes Stückgut (2) mindestens einer der mindestens drei parallelen Reihen (1) durch wenigstens einen der Manipulatoren (5) erfasst, von nachfolgenden Stückgütern (2) der jeweiligen Reihe (1) räumlich abgetrennt und in eine definierte relative Zielposition (P) und/oder Zielausrichtung gegenüber den nachfolgenden Stückgütern (2) der jeweiligen Reihe (1) gebracht wird, **dadurch gekennzeichnet, dass**
- zumindest Raumkoordinaten und/oder eine Position eines der in Transportrichtung (TR) zum Erfassungsbereich (4) bewegten Stückgüter (2) mindestens einer Reihe (1) über wenigstens eine von wenigstens zwei dem Erfassungsbereich (4) räumlich und/oder funktionell zugeordneten und beweglich ausgebildeten optischen Erfassungseinrichtungen (40) sensorisch erfasst und einer Steuer- und/oder Auswerteeinheit (12) als Positionswert zur Verfügung gestellt wird,
- wobei die wenigstens zwei optischen Erfassungseinrichtungen (40) an einander gegenüberliegenden Längsseiten der Horizontalfördereinrichtung (6) angeordnet sind,
- wobei wenigstens eine der optischen Erfassungseinrichtungen (40) zum Erfassen der Daten von Stückgütern (2) einer jeweilig zugeordneten Reihe (1) parallel zur Transportrichtung (TR) in oder entgegen der Transportrichtung (TR) bewegt wird,
- wobei zumindest einer der Manipulatoren (5) und/oder weitere zugeordnete Förderkomponenten auf Grundlage der Raumkoordinaten und/oder Positions- und/oder Umrissdaten kalibriert und/oder gesteuert wird/werden.

13. Verfahren nach Anspruch 12, bei dem die mindestens zwei optischen Erfassungseinrichtungen (40) mindestens drei unterschiedliche Erkennungsbereiche (50) im Erfassungsbereich (4) der Vorrichtung (10) abdecken, insbesondere wobei die mindestens zwei optischen Erfassungseinrichtungen (40) eine Anzahl an unterschiedlichen Erkennungsbereichen (50) im Erfassungsbereich (4) der Vorrichtung (10), die der Anzahl an zum Erfassungsbereich (4) der Vorrichtung (10) führenden Reihen (1) an Stückgütern (2) entspricht.

## Claims

1. A device (10) for handling piece goods (2), which piece goods (2) are moved in at least three parallel rows (1), the device (10) comprising
- at least one transport device (3), by means of which transport device (3) the moved piece goods (2) can be transported in at least three rows (1) in a transport direction (TR) to seizing ranges (4) of the at least two manipulators (5),
- wherein the device (10) comprises at least two manipulators (5) for piece goods (2), which manipulators (5) can be controlled and moved independently of one another,
- wherein at least one horizontal conveying device (6) is associated with the seizing ranges (4) of the at least two manipulators (5), which horizontal conveying device (6) respectively adjoins the transport devices (3) in an aligned manner, and which horizontal conveying device (6) transports the piece goods (2) in the transport direction (TR), which piece goods (2) are reaching the seizing ranges (4) and are rotated and/or displaced therein by means of the manipulators (5), **characterized by**
- at least two movable optical detection devices (40), which optical detection devices (40) are assigned to the seizing ranges (4) and/or the movement spaces of the at least two manipulators (5) and which optical detection devices (40) are each prepared and equipped for obtaining spatial coordinates and/or positional data and/or contour data of at least one piece good (2) of the at least three rows (1), which piece goods (2) are being moved in the transport direction (TR),
- wherein the at least two optical detection devices (40) are designed to be movable on opposite longitudinal sides of the horizontal conveying device (6) parallel to the transport direction (TR) in or against the transport direction (TR),
- wherein at least the manipulators (5) and/or further conveying components of the device (10) can be calibrated and/or controlled on the basis of the spatial coordinates and/or positional data and/or contour data.

2. The device according to claim 1, comprising a plurality of optical detection devices (40), the number of optical detection devices (40) corresponding to the number of infeeding rows (1) of piece goods (2).

3. The device according to claim 1 or 2, comprising at least three optical detection devices (40), wherein at least two optical detection devices (40) are arranged in the region of one longitudinal side of the horizontal conveying device (6).

4. The device according to claim 3, wherein the at least two optical detection devices (40) arranged in the region of one longitudinal side of the horizontal conveying device (6) comprise a common drive and a common range of movement (45).

5. The device according to claim 3, in which the at least two optical detection devices (40) arranged in the region of one longitudinal side of the horizontal conveying device (6) each comprise its own drive and its own range of movement (45).

6. The device according to one of the claims 3 to 5, in which the at least two optical detection devices (40) arranged in the region of one longitudinal side of the horizontal conveying device (6) each cover different detection regions (50) within the seizing range (4) of the device (10), in particular wherein a first optical detection device (40) covers a first detection region (50) within the seizing range (4) of the device (10) in alignment with a first of the at least three rows (1) of piece goods (2), and wherein a second optical detection device (40) covers a second detection region (50) within the seizing range (4) of the device (10) in alignment with a second of the at least three rows (1) of piece goods (2).

7. The device according to claim 6, in which the at least one optical detection device (40) arranged in the region of the opposite longitudinal side of the horizontal conveying device (6) covers a further detection region (50) within the seizing range (40) of the device (10), in particular a third detection region (50) within the seizing range (4) of the device (10) in alignment with a third of the at least three rows (1) of piece goods (2).

8. The device according to one of the claims 3 to 7, in which the at least two optical detection devices (40), which are arranged in the region of one longitudinal side of the horizontal conveying device (6), are arranged at different heights above a conveying surface or conveying plane for the piece goods (2), which conveying surface or conveying plane is formed by the horizontal conveying device (6).

9. The device according to one of claims 1 to 8, in which at least one optical detection device (40) is designed to be movable in the vertical direction and can be arranged in at least two different height levels above a conveying surface formed by the horizontal conveying device (6).

10. The device according to claim 9, in which the optical detection device (40), which can be arranged in at least two different height levels, covers at least two different detection areas (50) within the seizing range (4) of the device (10), in particular wherein the optical detection device (40) arranged at a first height level (H1) covers a first detection area (50) within the seizing range (4) of the device (10) in alignment with a first of the at least three rows (1) of piece goods (2), and wherein the optical detection device (40) arranged at a second height level (H2) covers a second detection area (50) within the seizing range (4) of the device (10) in alignment with a second of the at least three rows (1) of piece goods (2).

11. The device according to one of the preceding claims, in which at least one optical detection device (40) is formed by at least one edge scanner, which edge scanner supplies the control and/or evaluation unit (12) with spatial coordinates and/or positional data and/or contour data for a moving piece good (2) of the respectively associated row (1), in particular spatial coordinates and/or positional data and/or contour data for the respective frontmost piece good (2) of the respective associated row (1) and/or of a contour edge (30) pointing forward or backward in the transport direction (TR) and/or in which at least one optical detection device (40) is formed by at least one camera with downstream image evaluation, from the data of which camera the control and/or evaluation unit (12) obtains spatial coordinates and/or positional data and/or contour data for a moving piece good (2) of the respectively associated row (1), in particular spatial coordinates and/or positional data and/or contour data for the respectively frontmost piece good (2) of the respectively associated row (1) and/or of its contour edge (30) pointing forward or backward in the transport direction (TR).

12. A method for handling piece goods (2) moved in at least three parallel rows (1), wherein the piece goods (2) are transported to a seizing range (4) of at least two manipulators (5), which manipulators (5) can be controlled and moved independently of one another;
- wherein within the seizing range (4) at least one moved piece good (2) of at least one of the at least three parallel rows (1) is being seized by at least one of the manipulators (5), is being spatially separated from subsequent piece goods (2) of the respective row (1) and is being brought into a defined relative target position (P) and/or target orientation with respect to the subsequent piece goods (2) of the respective row (1), **characterised in that**
- at least spatial coordinates and/or a position of one of the piece goods (2) of at least one row (1) is detected by sensors via at least one of at least two optical detection devices (40), which piece good (2) is moved in the transport direction (TR) to the seizing range (4), which optical detection devices (40) are spatially and/or functionally assigned to the seizing range (4) and which optical detection devices (40) are designed to be movable, and which spatial coordinates and/or position is made available to a control and/or evaluation unit (12) as a position value,
- wherein the at least two optical detection devices (40) are arranged on opposite longitudinal sides of the horizontal conveying device (6),
- wherein at least one of the optical detection devices (40) for detecting the data of piece goods (2) of a respective associated row (1) is moved parallel to the transport direction (TR) in or against the transport direction (TR),
- wherein at least one of the manipulators (5) and/or further associated conveying components is/are calibrated and/or controlled on the basis of the spatial coordinates and/or positional data and/or contour data.

13. The method according to claim 12, in which the at least two optical detection devices (40) cover at least three different detection areas (50) within the seizing range (4) of the device (10), in particular wherein the at least two optical detection devices (40) cover a number of different detection areas (50) within the seizing range (4) of the device (10), which number of different detection areas (50) corresponds to the number of rows (1) of piece goods (2) leading to the seizing range (4) of the device (10).

## Revendications

1. Dispositif (10) de manipulation de produits de détail (2) déplacés en au moins trois rangées (1) parallèles, comprenant
- au moins un dispositif de transport (3) par l'intermédiaire duquel les produits de détail (2) déplacés peuvent être transportés en au moins trois rangées (1) dans une direction de transport (TR) vers des zones de saisie (4) desdits au moins deux manipulateurs (5),
- dans lequel le dispositif (10) comprend au moins deux manipulateurs (5) pour des produits de détail (2), qui peuvent être commandés et déplacés indépendamment l'un de l'autre,
- dans lequel aux zones de saisie (4) desdits au moins deux manipulateurs (5) est associé au moins un dispositif de transport horizontal (6) qui est respectivement contigu en alignement aux dispositifs de transport (3) et qui transporte, dans la direction de transport (TR), les produits de détail (2) entrant dans les zones de saisie (4) et tournés et/ou déplacés dans celles-ci au moyen des manipulateurs (5), **caractérisé par**
- au moins deux dispositifs de détection optique (40) aptes à être déplacés qui sont associés aux zones de saisie (4) et/ou aux espaces de déplacement desdits au moins deux manipulateurs (5) et qui sont préparés et équipés chacun pour acquérir des coordonnées spatiales et/ou des données de position et/ou de contour d'au moins un produit de détail (2) desdites au moins trois rangées (1), qui est déplacé dans la direction de transport (TR),
- dans lequel lesdits au moins deux dispositifs de détection optique (40) sont conçus sur des côtés longitudinaux opposés du dispositif de transport horizontal (6) de manière à être mobiles parallèlement à la direction de transport (TR) dans ou contre la direction de transport (TR),
- dans lequel au moins les manipulateurs (5) et/ou d'autres composants de transport du dispositif (10) peuvent être calibrés et/ou commandés sur la base des coordonnées spatiales et/ou des données de position et/ou de contour.

2. Dispositif selon la revendication 1, qui comprend une pluralité de dispositifs de détection optique (40), dans lequel le nombre de dispositifs de détection optique (40) correspond au nombre de rangées (1) amenées de produits de détail (2).

3. Dispositif selon la revendication 1 ou 2, qui comprend au moins trois dispositifs de détection optique (40), dans lequel au moins deux dispositifs de détection optique (40) sont disposés au niveau d'un côté longitudinal du dispositif de transport horizontal (6).

4. Dispositif selon la revendication 3, dans lequel lesdits au moins deux dispositifs de détection optique (40) au niveau d'un côté longitudinal du dispositif de transport horizontal (6) comprennent un mécanisme d'entraînement commun et une zone de déplacement commune (45).

5. Dispositif selon la revendication 3, dans lequel lesdits au moins deux dispositifs de détection optique (40) au niveau d'un côté longitudinal du dispositif de transport horizontal (6) comprennent chacun un propre mécanisme d'entraînement et une propre zone de déplacement (45).

6. Dispositif selon l'une quelconque des revendications 3 à 5, dans lequel lesdits au moins deux dispositifs de détection optique (40) disposés au niveau d'un côté longitudinal du dispositif de transport horizontal (6) couvrent chacun des zones d'identification (50) différentes dans la zone de saisie (4) du dispositif (10), en particulier dans lequel un premier dispositif de détection optique (40) couvre une première zone d'identification (50) dans la zone de saisie (4) du dispositif (10), en alignement par rapport à une première desdites au moins trois rangées (1) de produits de détail (2), et dans lequel un deuxième dispositif de détection optique (40) couvre une deuxième zone d'identification (50) dans la zone de saisie (4) du dispositif (10), en alignement par rapport à une deuxième desdites au moins trois rangées (1) de produits de détail (2).

7. Dispositif selon la revendication 6, dans lequel ledit au moins un dispositif de détection optique (40) au niveau du côté longitudinal opposé du dispositif de transport horizontal (6) couvre une autre zone d'identification (50) dans la zone de saisie (40) du dispositif (10), en particulier une troisième zone d'identification (50) dans la zone de saisie (4) du dispositif (10), en alignement par rapport à une troisième desdites au moins trois rangées (1) de produits de détail (2).

8. Dispositif selon l'une quelconque des revendications 3 à 7, dans lequel lesdits au moins deux dispositifs de détection optique (40) au niveau d'un côté longitudinal du dispositif de transport horizontal (6) sont disposés à des hauteurs différentes au-dessus d'une surface de transport ou d'un plan de transport pour les produits de détail (2), formé(e) par le dispositif de transport horizontal (6).

9. Dispositif selon l'une quelconque des revendications 1 à 8, dans lequel au moins un dispositif de détection optique (40) est conçu de manière à être mobile dans la direction verticale et peut être disposé à au moins deux niveaux de hauteur différents au-dessus d'une surface de transport formée par le dispositif de transport horizontal (6).

10. Dispositif selon la revendication 9, dans lequel le dispositif de détection optique (40) apte à être disposé à au moins deux niveaux de hauteur différents couvre au moins deux zones d'identification (50) différentes dans la zone de saisie (4) du dispositif (10), en particulier dans lequel le dispositif de détection optique (40) disposé à un premier niveau de hauteur (H1) couvre une première zone d'identification (50) dans la zone de saisie (4) du dispositif (10), en alignement par rapport à une première desdites au moins trois rangées (1) de produits de détail (2), et dans lequel le dispositif de détection optique (40) disposé à un deuxième niveau de hauteur (H2) couvre une deuxième zone d'identification (50) dans la zone de saisie (4) du dispositif (10), en alignement par rapport à une deuxième desdites au moins trois rangées (1) de produits de détail (2).

11. Dispositif selon l'une quelconque des revendications précédentes, dans lequel au moins un dispositif de détection optique (40) est formé par au moins un scanner de bord qui fournit à l'unité de commande et/ou d'évaluation (12) des coordonnées spatiales et/ou des données de position et/ou de contour pour un produit de détail (2) déplacé de la rangée (1) respectivement associée, en particulier des coordonnées spatiales et/ou des données de position et/ou de contour pour le produit de détail (2) se trouvant respectivement en premier de la rangée (1) respectivement associée et/ou d'un bord de contour (30) montrant vers l'avant ou vers l'arrière dans la direction de transport (TR), et/ou dans lequel au moins un dispositif de détection optique (40) est formé par au moins une caméra avec une évaluation d'image montée en aval, à partir des données de laquelle l'unité de commande et/ou d'évaluation (12) acquiert des coordonnées spatiales et/ou des valeurs de position et/ou de contour pour un produit de détail (2) déplacé de la rangée (1) respectivement associée, en particulier des coordonnées spatiales et/ou des valeurs de position et/ou de contour pour le produit de détail (2) se trouvant respectivement en premier de la rangée (1) respectivement associée et/ou son bord de contour (30) montrant vers l'avant ou vers l'arrière dans la direction de transport (TR).

12. Procédé de manipulation de produits de détail (2) déplacés en au moins trois rangées (1) parallèles, dans lequel les produits de détail (2) sont transportés vers une zone de saisie (4) d'au moins deux manipulateurs (5) aptes à être commandés et déplacés indépendamment l'un de l'autre;
- dans lequel, dans la zone de saisie (4), au moins un produit de détail (2) transporté d'au moins une desdites au moins trois rangées (1) parallèles est saisi par au moins un des manipulateurs (5), est séparé spatialement de produits de détail (2) suivants de la rangée (1) respective et est amené dans une position cible (P) et/ou une orientation cible relative(s) définie(s) par rapport aux produits de détail (2) suivants de la rangée (1) respective, **caractérisé par le fait qu'**
- au moins des coordonnées spatiales et/ou une position de l'un des produits de détail (2) d'au moins une rangée (1), déplacés dans la direction de transport (TR) vers la zone de saisie (4) est/sont détectée(s) par capteur par l'intermédiaire d'au moins un d'au moins deux dispositifs de détection optique (40) qui sont associés spatialement et/ou fonctionnellement à la zone de saisie (4) et sont réalisés de manière mobile, et est/sont mise(s) à la disposition d'une unité de commande et/ou d'évaluation (12) en tant que valeur de position, et
- dans lequel lesdits au moins deux dispositifs de détection optique (40) sont disposés sur des côtés longitudinaux opposés du dispositif de transport horizontal (6),
- dans lequel l'un au moins des dispositifs de détection optique (40) est déplacé parallèlement à la direction de transport (TR) dans ou contre la direction de transport (TR) pour acquérir des données de produits de détail (2) d'une rangée (1) respectivement associée,
- dans lequel l'un au moins des manipulateurs (5) et/ou d'autres composants de transport associés est/sont calibré(s) et/ou commandé(s) sur la base des coordonnées spatiales et/ou des données de position et/ou de contour.

13. Procédé selon la revendication 12, dans lequel lesdits au moins deux dispositifs de détection optique (40) couvrent au moins trois zones d'identification (50) différentes dans la zone de saisie (4) du dispositif (10), en particulier dans lequel lesdits au moins deux dispositifs de détection optique (40) couvrent un nombre de zones d'identification (50) différentes dans la zone de saisie (4) du dispositif (10), qui correspond au nombre de rangées (1) de produits de détail (2) à mener vers la zone de saisie (4) du dispositif (10).
